# EUROPÄISCHE PATENTSCHRIFT

(11) **EP 4 554 151 B1**
(45) Veröffentlichungstag und Bekanntmachung des Hinweises auf die Patenterteilung: **03.06.2026**
(21) Anmeldenummer: 24206110.9
(22) Anmeldetag: 11.10.2024
(51) Int. Cl.: H04L 12/413

(54) **SENDEMODUL FÜR EINE SENDE-/EMPFANGSEINRICHTUNG EINER TEILNEHMERSTATION EINES SERIELLEN BUSSYSTEMS UND VERFAHREN ZUM SENDEN EINER NACHRICHT MIT DIFFERENTIELLEN SIGNALEN IN EINEM SERIELLEN BUSSYSTEM**
TRANSMISSION MODULE FOR A TRANSMISSION/RECEPTION DEVICE OF A SUBSCRIBER STATION OF A SERIAL BUS SYSTEM AND METHOD FOR TRANSMITTING A MESSAGE WITH DIFFERENTIAL SIGNALS IN A SERIAL BUS SYSTEM
MODULE D'ÉMISSION POUR UN DISPOSITIF D'ÉMISSION/RÉCEPTION D'UNE STATION D'ABONNÉ D'UN SYSTÈME DE BUS SÉRIE ET PROCÉDÉ D'ÉMISSION D'UN MESSAGE À SIGNAUX DIFFÉRENTIELS DANS UN SYSTÈME DE BUS SÉRIE

(30) Priorität: 07.11.2023 DE 102023210992
(43) Veröffentlichungstag der Anmeldung: 14.05.2025
(73) Patentinhaber: Robert Bosch GmbH, 70442 Stuttgart (DE)
(72) Erfinder: Walker, Steffen, 72770 Reutlingen (DE); Mages, Christian, 70191 Stuttgart (DE)

(56) Entgegenhaltungen:
- US-A1- 2020 141 967
- US-A1- 2021 258 185
- US-A1- 2023 216 705

## Beschreibung

Die vorliegende Erfindung betrifft ein Sendemodul für eine Sende-/Empfangseinrichtung einer Teilnehmerstation eines seriellen Bussystems und ein Verfahren zum Senden einer Nachricht mit differentiellen Signalen in einem seriellen Bussystem.

### Stand der Technik

Serielle Bussysteme haben einen Bus, an den Teilnehmerstationen mittels einer Sende-/Empfangseinrichtung angeschlossen sind, um über den Bus miteinander zu kommunizieren. Die Sende-/Empfangseinrichtung wird auch Transceiver genannt. Bei der Kommunikation werden Daten zwischen den Teilnehmerstationen ausgetauscht, die beispielsweise Sensoren, Steuergeräte in einem Fahrzeug oder einer technischen Produktionsanlage, usw. sind. Für die Datenübertragung in seriellen Bussystemen gibt es verschiedene Standards oder Datenübertragungsprotokolle. Bekannt für serielle Bussysteme mit differentiellen Signalen sind insbesondere ein CAN XL, 10BASE-T1S-Ethernet, FlexRay, LVDS (LVDS = Low Voltage Differential Signaling) und so weiter.

Jedes dieser seriellen Bussysteme verwendet differentielle Signale mit verschiedenen Signalzuständen, welche seriell die auszutauschenden Daten signalisieren. Die jeweils gewünschten Signalzustände können mit einem Sendemodul erzeugt werden, das an den Bus angeschlossen ist und als Vollbrücke mit einer Vielzahl von schaltbaren Widerständen ausgestaltet ist. Je nach Anzahl von leitfähig geschalteten Widerständen stellt sich am Ausgang der Vollbrücke ein entsprechender Widerstand ein und kann auf dem Bus eine entsprechende Spannung erzeugt werden. Dadurch ist jeder gewünschte Signalzustand auf dem Bus durch seine Leerlaufspannung und Innenwiderstand bestimmt. Für die auf den Bus gesendeten differentiellen Signale bildet sich auf dem Bus eine Differenzspannung aus.

Problematisch ist, dass der Übergang zwischen zwei Signalzuständen elektromagnetische Emissionen verursachen kann, die Störungen anderer elektrischer Geräte hervorrufen können. Daher existieren Vorgaben für maximal zulässige elektromagnetische Emissionen, die von jeder Sende-/Empfangseinrichtung (Transceiver) zu erfüllen sind. Jedoch stellen diese Anforderungen an die elektromagnetische Emissionen eine der größten Herausforderungen bei der Entwicklung einer solchen Sende-/Empfangseinrichtung (Transceiver) mit geschalteten Widerständen in der Vollbrücke dar; dies wird beispielhaft in der Offenbarung US 2021/258185 A1 gezeigt.

Die elektromagnetischen Emissionen werden durch Schwankungen des Common-Mode-Signals am Bus verursacht. Diese entstehen auf zwei Arten, nämlich erstens durch von dem Sendemodul (Transmitter) verursache Common-Mode Schwankungen und zweitens durch die äußere Beschaltung der Sende-/Empfangseinrichtung (Transceiver).

Die durch das Sendemodul (Transmitter) verursachten Common-Mode Schwankungen können durch Prozessvariationen, unzureichende Modellierung der verwendeten Komponenten etc. entstehen, wodurch die Signalzustände unterschiedliche Common-Modes haben, was nicht immer in Simulationen in der Designphase abgebildet werden kann.

Die durch die äußere Beschaltung der Sende-/Empfangseinrichtung (Transceiver) verursachten Common-Mode Schwankungen am Bus können selbst dann erzeugt werden, wenn die Sende-/Empfangseinrichtung ein "perfektes" Signal mit konstantem Common-Mode erzeugt. Grund dafür ist, dass die äußere Beschaltung nicht exakt symmetrisch ist und ein Teil des Differenzsignals zum Common-Mode Signal umgewandelt wird ("Differential-to-Commonmode Conversion"). Daher ist es wichtig, auch das Spektrum des differentiellen Signals zu optimieren. Wichtig hierfür ist die Form des Übergangs von einem Zustand in einen anderen.

Mathematisch lässt sich zeigen, dass die spektral optimale Form für Übergange des differentiellen Signals zwischen zwei Signalzuständen die Fehlerfunktion (Errorfunktion) ist, die das Integral der Gauss'schen Glockenfunktion ist. Daher sollten die Übergänge über diskrete Schritte, nämlich als Übergangszustände zwischen statischen Zuständen, möglichst genau an diese Funktion angenähert werden. Dies kann über eine entsprechende Ansteuerlogik erfolgen.

Jedoch besteht ein Zielkonflikt bei den Ansteuerungskonzepten zwischen Flexibilität, Effizienz (Chipfläche und Stromaufnahme), maximal möglicher Performance (optimales Emissionsverhalten) und Entwicklungsaufwand.

Ein anderes Problem liegt darin, dass Kommunikationsstandards für Fahrzeuge derart hohe Robustheitsanforderungen bezüglich der Spannungsfestigkeit der Sende-/Empfangseinrichtung (Transceiver) haben, dass die Sende-/Empfangseinrichtung (Transceiver) in großen Prozess-Knoten implementiert werden müssen. Solche Knoten oder Verteiler sind typischerweise größer als 100nm. Als Folge davon ist die Sende-/Empfangseinrichtung (Transceiver) in ihrer maximal möglichen digitalen Taktfrequenz begrenzt. Dadurch stehen insbesondere für einen schnellen Bussignalzustandsübergang, der auch als Flanke bezeichnet wird, dann nur noch wenige Schritte zur Verfügung, um die Übergangsform des Bussignals bzw. der Bussignale an die Fehlerfunktion (Errorfunktion) anzunähern.

Beispielsweise erfordert CAN-XL laut Spezifikation für ein Bussignal Steigungsraten (Slew-Raten) von t_rise < 20ns (20-80%). Bei einer Taktfrequenz von 500MHz (2ns/Takt) erlaubt dies lediglich maximal 10 diskrete Schritte, um einen kontinuierlichen Signalübergang in diesem Bereich anzunähern. Dies führt dazu, dass im Frequenzspektrum des Signalübergangs ein signifikanter Peak bei der Taktfrequenz des Digitalteils entsteht. Ähnliches gilt auch für andere serielle Bussysteme mit differentiellen Signalen.

Möglich ist, die Übergange des differentiellen Bussignals zwischen zwei Signalzuständen mit analogen Zeitschrittgeneratoren zu erzeugen, welche asynchron über die Dimensionierung von Kapazitäten und Strömen eine feste Form von Zeitschritten t1, t2, ..., tN für den Übergang vorgeben und welche als einzelne Schrittsignale S_1, ... , S_N den Ausgang der Schaltung bilden. Hierbei werden mehrere Ketten verwendet, um mehrere statische Zustände darstellen zu können. Um auf dem Bus die fünf Signalzustände (REC, SIC, DOM, LV0, LV1) von CAN XL zu erzeugen, ist eine minimale Anzahl von drei Ketten erforderlich.

Nachteilig an einem solche Zeitschrittgenerator ist jedoch, dass die drei Ketten einen hohen Schaltungs- und Entwicklungsaufwand erfordern und im Betrieb eine hohe Stromaufnahme haben. Zudem ist ein solcher Zeitschrittgenerator zwar sehr gut für die Anforderungen von CAN XL verwendbar, jedoch ist die Adaption für Sende-/Empfangseinrichtungen für die Erfüllung anderer Kommunikationsstandards sehr aufwändig.

### Offenbarung der Erfindung

Daher ist es Aufgabe der vorliegenden Erfindung, ein Sendemodul für eine Sende-/Empfangseinrichtung einer Teilnehmerstation eines seriellen Bussystems und ein Verfahren zum Senden einer Nachricht mit differentiellen Signalen in einem seriellen Bussystem bereitzustellen, welche die zuvor genannten Probleme lösen. Insbesondere sollen ein Sendemodul für eine Sende-/Empfangseinrichtung einer Teilnehmerstation eines seriellen Bussystems und ein Verfahren zum Senden einer Nachricht mit differentiellen Signalen in einem seriellen Bussystem bereitgestellt werden, die möglichst unaufwändig und somit kostengünstig eine zuverlässige und möglichst fehlerfreie und emissionsarme Erstellung/Erzeugung von Bussignalen für beliebige differentielle Bussysteme ermöglichen.

Die Aufgabe wird durch ein Sendemodul für eine Sende-/Empfangseinrichtung einer Teilnehmerstation eines seriellen Bussystems mit den Merkmalen von Anspruch 1 gelöst. Bei dem Bussystem ist das Sendemodul zum Senden eines digitalen Sendesignals als analoges differentielles Signal auf einen Bus des Bussystems ausgestaltet, um an mindestens eine andere Teilnehmerstation des Bussystems eine Nachricht zu senden. Hierbei weist das Sendemodul Sendestufen mit Parallelschaltungen aus schaltbaren Widerständen, und ein Steuerteil zur schrittweisen Steuerung des Schaltens der schaltbaren Widerstände auf, wobei mindestens zwei der schaltbaren Widerstände in einem Widerstandsblock gemeinsam schaltbar angeordnet sind, wobei mindestens zwei Widerstandsblöcke vorgesehen sind, die mindestens einen der schaltbaren Widerstände aufweisen, wobei das Steuerteil ausgestaltet ist, die von dem digitalen Sendesignal über der Zeit vorgegebenen Zwischenzustände auf dem Bus durch schrittweises Ändern über der Zeit der Zahl der aktiv geschalteten Widerstandsblöcke zu erzeugen.

Das beschriebene Sendemodul erfordert einen vergleichsweise geringen Schaltungs- und Entwicklungsaufwand für die beschriebene Konfiguration der schaltbaren Widerstandsarrays. Dabei ist die Anstiegsrate für den zu erzeugenden Übergang zwischen zwei Signalzuständen einstellbar.

Als Folge davon hat das beschriebene Sendemodul einen deutlich geringeren Platzbedarf als eine Implementierung mit mehreren Verzögerungsketten. Dadurch kann Halbleiterfläche eingespart werden, so dass das beschriebene Sendemodul äußerst ressourcenschonend und kostengünstig ist.

Als weitere Folge davon ist bei dem beschriebenen Sendemodul auch die Stromaufnahme im Betrieb des Sendemoduls sehr gering, insbesondere im Vergleich zu einer Lösung mit mehreren Verzögerungsketten.

Durch die Einstellbarkeit der Anstiegsrate ist das beschriebene Sendemodul sehr unaufwändig an die Erfüllung unterschiedlicher Kommunikationsstandards für differenzielle Bussysteme adaptierbar. Insbesondere ist das Sendemodul bei einer CAN SIC Sende-/Empfangseinrichtung und/oder bei einer CAN XL Sende-/Empfangseinrichtung und/oder bei einer 10BASE-T1S Sende-/Empfangseinrichtung und/oder bei einer sonstigen Sende-/Empfangseinrichtung für differentielle Signale einsetzbar.

Ein anderer Vorteil liegt darin, dass mit dem beschriebenen Sendemodul eine Steuerung zwischen den Zuständen sehr unaufwändig erfolgen kann. Dadurch kann die Sende-/Empfangseinrichtung sehr viele Möglichkeiten zeitrichtig und stetig abdecken, um ein zeitlich korrektes Schalten in den Endzustand ohne abrupte Übergänge zu gewährleisten.

Noch ein anderer Vorteil liegt darin, dass das Sendemodul sicherstellt, dass auch bei unvorhergesehenen unvollständigen Übergängen keine abrupten Änderungen am Ausgang des Sendemoduls möglich sind. Grund dafür ist, dass auch nach dem Zurücksetzen der Schaltung die Änderungen wieder nur Schritt für Schritt passieren. Dies sorgt für eine kontinuierlichen Ausgabe am Ausgang des Sendemoduls, was das Emissionsverhalten des Sendemoduls und der übergeordneten Sende-/Empfangseinrichtung günstig beeinflusst.

Auf diese Weise gewährleistet das beschriebene Sendemodul, dass der Bus keine abrupten Übergänge in Differenzspannung auf dem Bus und/oder Impedanz hat. Dadurch erzeugt die Sende-/Empfangseinrichtung kaum bis keine Emissionen und Reflexionen im Bussystem.

Insgesamt kann die beschriebene Sende-/Empfangseinrichtung dadurch nicht nur die Kommunikation im Bussystem zwischen anderen Teilnehmerstationen mit den für den jeweiligen Kommunikationsstandard geforderten (hohen) Bitraten realisieren, sondern ist auch derart ausgestaltet, dass die übertragbare Bitrate nicht durch Fehler in der Kommunikation herabgesetzt wird.

Vorteilhafte weitere Ausgestaltungen des Sendemoduls sind in den abhängigen Ansprüchen beschrieben.

Alle schaltbaren Widerstände haben möglicherweise in etwa denselben Widerstandswert.

Denkbar ist, dass der Widerstandswert eines ersten Widerstandsblocks der mindestens zwei Widerstandsblöcke in etwa halb so groß ist wie der Widerstandswert eines zweiten Widerstandsblocks der mindestens zwei Widerstandsblöcke.

In einer speziellen Ausgestaltung hat das Sendemodul zudem einem Zustandsbearbeitungsblock zum Auswerten des digitalen Sendesignals, um zu entscheiden, wie die schaltbaren Widerstände der Parallelschaltungen schrittweise zu schalten sind, um den angestrebten Zustand auf dem Bus einzustellen.

Der Zustandsbearbeitungsblock kann ausgestaltet sein zum Erzeugen eines Anstiegsratesignals, wobei der Zustandsbearbeitungsblock ausgestaltet ist, das Anstiegsratesignal auf der Grundlage eines Auswerteergebnisses des digitalen Sendesignals zu erzeugen.

Der Zustandsbearbeitungsblock kann ausgestaltet sein zum Erzeugen eines Schrittstartsignals, wobei der Zustandsbearbeitungsblock ausgestaltet ist, das Anstiegsratesignal nach Freigabe durch das Schrittstartsignal zur Ansteuerung der schaltbaren Widerstände auszugeben.

Gemäß einer Ausgestaltung hat das Sendemodul zudem einen Schrittgenerator zum Erzeugen eines Schrittsignals auf der Grundlage eines Anstiegsratesignals und zur Ausgabe des Schrittsignals an einen Logikblock zur Ansteuerung von Schaltern der Parallelschaltung zum Schalten der schaltbaren Widerstände.

Möglicherweise ist der Zustandsbearbeitungsblock ausgestaltet zum Erzeugen eines Rücksetzsignals zum Zurücksetzen des Schrittgenerators auf einen Ausgangswert.

Gemäß einer Ausgestaltung hat das Sendemodul zudem einen Logikblock zum Erzeugen eines Steuersignals zur Ansteuerung der mindestens zwei Widerstandsblöcke einer Sendestufe.

Optional hat der Logikblock mindestens zwei Flipflops, die zum Erzeugen eines Ansteuersignals für jeweils einen der mindestens zwei Widerstandsblöcke angeordnet sind, wobei der Logikblock ausgestaltet ist, das Steuersignal als eine binäre Zahl mit Bits zu erzeugen, deren Anzahl gleich der Anzahl der mindestens zwei Flipflops ist und die Bits an die mindestens zwei Flipflops auszugeben.

Gemäß einer Ausgestaltung hat das Sendemodul zudem einen Speicherblock, in dem Sollwerte für die Widerstandswerte der Parallelschaltungen gespeichert sind, die für Übergänge zwischen Signalzuständen auf dem Bus für jeden Zwischenzustand im Übergang zu erzeugen sind, wobei der Zustandsbearbeitungsblock ausgestaltet ist zum Erzeugen, auf der Grundlage der Auswertung des digitalen Sendesignals, eines Auswahlsignals und zur Ausgabe des Auswahlsignals an den Logikblock, und wobei der Logikblock ausgestaltet ist, zum Erzeugen des Steuersignals zur Ansteuerung der mindestens zwei Widerstandsblöcke einer Sendestufe auf der Grundlage der von dem Auswahlsignal ausgewählten Übergänge.

Möglicherweise hat das Sendemodul zum Erzeugen jedes Zwischenzustands auf dem Bus eine Widerstandszelle, in welcher Widerstandsblöcke angeordnet sind, wobei der Logikblock zum Ansteuern jedes Zwischenzustands auf dem Bus eine Steuerzelle aufweist, die zum Steuern einer der Widerstandszellen ausgestaltet ist, und wobei alle Steuerzellen für jeden Zwischenzustand identisch aufgebaut sind.

In einer speziellen Ausgestaltung sind eine erste bis vierte Sendestufe in eine Vollbrücke geschaltet sind, bei der die erste und vierte Sendestufe in Reihe geschaltet sind und die dritte und zweite Sendestufe in Reihe geschaltet sind. Hierbei können die erste bis vierte Sendestufe zum Erzeugen von differentiellen Bussignalen für einen Bus des Bussystems als Reaktion auf die beiden unterschiedlichen Werte des digitalen Sendesignals derart ausgestaltet sein, dass das Sendemodul in seiner ersten Betriebsart einen ersten oder zweiten Buszustand auf dem Bus erzeugt und in seiner zweiten Betriebsart einen dritten oder vierten Buszustand erzeugt, wobei die Bussignale auf dem Bus eine Differenzspannung bilden, deren Spannungswert für den ersten bis vierten Buszustand unterschiedlich ist.

Das zuvor beschriebene Sendemodul kann Teil einer Sende-/Empfangseinrichtung sein, die zudem ein Empfangsmodul hat zum Empfangen von Signalen von dem Bus und zum Erzeugen eines digitalen Empfangssignals aus dem analogen differentiellen Signal.

Möglicherweise ist das Sendemodul ausgestaltet, die analogen differentiellen Signale in einer ersten Kommunikationsphase der Nachricht mit einem anderen Physical Layer zu erzeugen als in einer zweiten Kommunikationsphase.

Die zuvor beschriebene Sende-/Empfangseinrichtung kann Teil einer Teilnehmerstation für ein serielles Bussystem sein. Die Teilnehmerstation kann zudem eine Kommunikationssteuereinrichtung zur Steuerung der Kommunikation in dem Bussystem und zur Erzeugung des ersten Sendesignals sein. Die Teilnehmerstation kann für die Kommunikation in dem Bussystem ausgestaltet sein, in dem zumindest zeitweise ein exklusiver, kollisionsfreier Zugriff einer Teilnehmerstation auf den Bus des Bussystems gewährleistet ist.

Die zuvor genannte Aufgabe wird zudem durch ein Verfahren zum Senden einer Nachricht mit differentiellen Signalen in einem seriellen Bussystem mit den Merkmalen von Anspruch 18 gelöst. Das Verfahren wird mit einem Sendemodul ausgeführt, das Sendestufen mit Parallelschaltungen aus schaltbaren Widerständen aufweist und zum Senden eines digitalen Sendesignals als analoges differentielles Signal auf einen Bus des Bussystems ausgestaltet ist, um an mindestens eine andere Teilnehmerstation des Bussystems eine Nachricht zu senden, wobei das Verfahren den Schritte aufweist schrittweise Steuern des Schaltens von schaltbaren Widerständen mit einem Steuerteil des Sendemoduls, wobei mindestens zwei der schaltbaren Widerstände in einem Widerstandsblock gemeinsam schaltbar angeordnet sind, wobei mindestens zwei Widerstandsblöcke vorgesehen sind, die mindestens einen der schaltbaren Widerstände aufweisen, und Erzeugen, und wobei das Steuerteil die von dem digitalen Sendesignal über der Zeit vorgegebenen Buszustände auf dem Bus durch schrittweises Ändern über der Zeit der Zahl der aktiv geschalteten Widerstandsblöcke erzeugt.

Das Verfahren bietet dieselben Vorteile, wie sie zuvor in Bezug auf das Sendemodul genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispiel(en) näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein Beispiel für den idealen zeitlichen Verlauf von Bussignalen CAN_H, CAN_L, die von Teilnehmerstationen des Bussystems für die Nachricht von Fig. 2 auf einen Bus des Bussystems gesendet werden;
Fig. 4 den zeitlichen Verlauf einer Differenzspannung VDIFF, die gleich der Busspannung VBUS, insbesondere gleich VCAN, ist und sich auf dem Bus des Bussystems infolge der Bussignale von Fig. 3 ausbildet;
Fig. 5 ein Beispiel für einen zeitlichen Verlauf eines digitalen Sendesignals, welches in einer Arbitrationsphase (SIC-Betriebsart) in Bussignale CAN_H, CAN_L für einen Bus des Bussystems von Fig. 1 umgesetzt werden soll;
Fig. 6 den zeitlichen Verlauf der Bussignale CAN_H, CAN_L beim Wechsel zwischen einem rezessiven Buszustand zu einem dominanten Buszustand und zurück zu dem rezessiven Buszustand, die in der Arbitrationsphase (SIC-Betriebsart) aufgrund des Sendesignals von Fig. 5 auf den Bus gesendet werden;
Fig. 7 ein Beispiel für einen zeitlichen Verlauf eines digitalen Sendesignals, welches in einer Datenphase in Bussignale CAN_H, CAN_L für den Bus des Bussystems von Fig. 1 umgesetzt werden soll;
Fig. 8 den zeitlichen Verlauf der Bussignale CAN_H, CAN_L, die in der Datenphase aufgrund des Sendesignals von Fig. 7 auf den Bus gesendet werden;
Fig. 9 ein Schaltbild eines Sendemoduls für eine Sende-/Empfangseinrichtung, das für eine Teilnehmerstation des Bussystems gemäß dem ersten Ausführungsbeispiel verwendbar ist;
Fig. 10 ein Blockschaltbild eines Steuerteils des Sendemoduls von Fig. 9;
Fig. 11 einen zeitlichen Verlauf eines Signalzustandsübergangs, der mit dem Sendemodul von Fig. 9 erzeugbar ist; und
Fig. 12 ein elektrisches Schaltbild eines Teils eines Logikblocks des Steuerteils von Fig. 10 und eines Widerstandsarrays für eine Sendestufe des Sendemoduls von Fig. 9.

In den Figuren sind gleiche oder funktionsgleiche Elemente, sofern nichts anderes angegeben ist, mit denselben Bezugszeichen versehen.

### Beschreibung der Ausführungsbeispiele

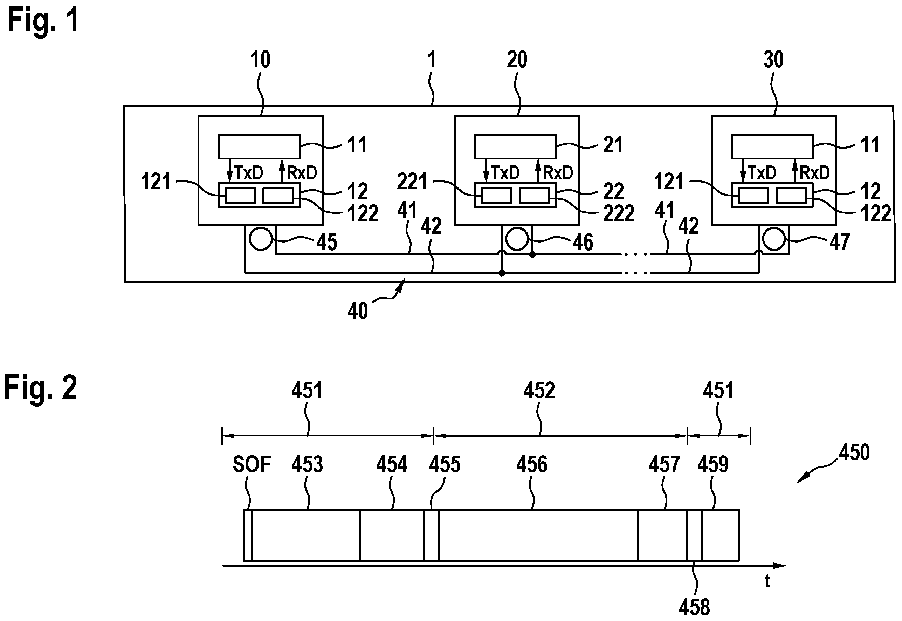

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

Auch wenn das Bussystem 1 nachfolgend anhand von CAN-Bussystemen beschrieben ist, ist das Bussystem 1 jedoch nicht auf CAN-Bussysteme beschränkt. Alternativ kann das Bussystem 1 insbesondere ein 10BASE-T1S-Bussystem oder ein sonstiges serielles Bussystem 1 sein, das insbesondere differentielle Signale verwendet.

In Fig. 1 hat das Bussystem 1 eine Vielzahl von Teilnehmerstationen 10, 20, 30, die jeweils an einen Bus 40 oder Busleitung mit einer ersten Busader 41 und einer zweiten Busader 42 angeschlossen sind. Die Busadern 41, 42 können bei einem CAN-Bussystem auch CANH und CANL zum Leiten von Signalen CAN_H, CAN_L auf dem Bus 40 genannt werden. Bei einem 10BASE-T1S-Bussystem werden die Busadern 41, 42 LINE+ und LINE- genannt.

Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 sind beispielsweise Steuergeräte oder Anzeigevorrichtungen eines Kraftfahrzeugs.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtung 12 hat ein Sendemodul 121 und ein Empfangsmodul 122.

Die Teilnehmerstation 20 hat eine Kommunikationssteuereinrichtung 21 und eine Sende-/Empfangseinrichtung 22. Die Sende-/Empfangseinrichtung 22 hat ein Sendemodul 221 und ein Empfangsmodul 222.

Die Sende-/Empfangseinrichtungen 12 der Teilnehmerstationen 10, 30 und die Sende-/Empfangseinrichtung 22 der Teilnehmerstation 20 sind jeweils direkt an den Bus 40 angeschlossen, auch wenn dies in Fig. 1 nicht dargestellt ist.

Die Kommunikationssteuereinrichtungen 11, 21 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtung 11 erstellt und liest erste Nachrichten 45, 47, die beispielsweise modifizierte CAN Nachrichten 45, 47 sind. Hierbei sind die modifizierten CAN Nachrichten 45, 47 beispielsweise auf der Grundlage des CAN XL-Formats aufgebaut. Die Sende-/Empfangseinrichtung 12 dient zum Senden und Empfangen der Nachrichten 45, 47 von dem Bus 40. Das Sendemodul 121 empfängt ein von der Kommunikationssteuereinrichtung 11 für eine der Nachrichten 45, 47 erstelltes digitales Sendesignal TxD und setzt dieses in Signale auf den Bus 40 um. Das digitale Sendesignal TxD kann zumindest zeitweise bzw. abschnittsweise ein pulsweiten-moduliertes Signal sein. Das Empfangsmodul 122 empfängt auf dem Bus 40 gesendete Signale entsprechend den Nachrichten 45 bis 47 und erzeugt daraus ein digitales Empfangssignal RxD. Das Empfangsmodul 122 sendet das Empfangssignal RxD an die Kommunikationssteuereinrichtung 11.

Zusätzlich kann die Kommunikationssteuereinrichtung 11 zum Erstellen und Lesen von zweiten Nachrichten 46 ausgestaltet sein, die beispielsweise CAN SIC Nachrichten 46 sind. Die Sende-/Empfangseinrichtung 12 kann entsprechend ausgestaltet sein.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller oder ein CAN SIC Controller. Die Kommunikationssteuereinrichtung 21 erstellt und liest zweite Nachrichten 46, beispielsweise CAN FD- Nachrichten oder CAN SIC-Nachrichten. Die Sende-/Empfangseinrichtung 22 dient zum Senden und Empfangen der Nachrichten 46 von dem Bus 40. Das Sendemodul 221 empfängt ein von der Kommunikationssteuereinrichtung 21 erstelltes digitales Sendesignal TxD und setzt dieses in Signale für eine Nachricht 46 auf den Bus 40 um. Das Empfangsmodul 222 empfängt auf dem Bus 40 gesendete Signale entsprechend den Nachrichten 45 bis 47 und erzeugt daraus ein digitales Empfangssignal RxD. Die Sende-/Empfangseinrichtung 22 ist möglicherweise wie ein herkömmlicher CAN FD- Transceiver oder CAN-SIC-Transceiver ausgeführt.

Zum Senden der Nachrichten 45, 46, 47 mit CAN SIC oder CAN XL werden bewährte Eigenschaften übernommen, die für die Robustheit und Anwenderfreundlichkeit von CAN und CAN FD verantwortlich sind, insbesondere Rahmenstruktur mit Identifier und Arbitrierung nach dem bekannten CSMA/CR-Verfahren. Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können.

Mit den beiden Teilnehmerstationen 10, 30 ist eine Bildung und dann Übertragung von Nachrichten 45, 47 mit verschiedenen CAN-Formaten, insbesondere dem CAN FD Format oder dem CAN SIC Format oder dem CAN XL Format, sowie der Empfang solcher Nachrichten 45, 47 realisierbar. Dies ist nachfolgend für eine Nachricht 45 genauer beschrieben.

Fig. 2 zeigt für die Nachricht 45 einen Rahmen 450, der insbesondere ein CAN XL Rahmen ist, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD. Alternativ ist der Rahmen 450 kompatibel zu einem beliebigen Nachfolgestandard für CAN FD.

Gemäß Fig. 2 ist der Rahmen 450 für die CAN-Kommunikation auf dem Bus 40 in unterschiedliche Kommunikationsphasen 451, 452 unterteilt, nämlich eine Arbitrationsphase 451 (erste Kommunikationsphase) und eine Datenphase 452 (zweite Kommunikationsphase). Der Rahmen 450 hat, nach einem Startbit SOF, ein Arbitrationsfeld 453, ein Steuerfeld 454, ein erstes Umschaltfeld 455, ein Datenfeld 456, ein Prüfsummenfeld 457, ein zweites Umschaltfeld 458 und ein Rahmenabschlussfeld 459. Das Prüfsummenfeld 457, das zweite Umschaltfeld 458 und das Rahmenabschlussfeld 459 bilden eine Rahmenendphase 457, 458, 459 des Rahmens 450.

In der Arbitrationsphase 451 wird mit Hilfe eines Identifizierers (ID) in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Während der Phase 451 findet das bekannte CSMA/CR-Verfahren Verwendung, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

Am Ende der Arbitrationsphase 451 wird, mit Hilfe des ersten Umschaltfelds 455, in die Datenphase 452 umgeschaltet.

In der Datenphase 452 werden neben einem Teil des ersten Umschaltfelds 455 die Nutzdaten des CAN-XL-Rahmens 450 bzw. der Nachricht 45 aus dem Datenfeld 456 sowie das Prüfsummenfeld 457 und ein Teil des zweiten Umschaltfelds 458 gesendet. Am Ende der Datenphase 452 wird, mit Hilfe des zweiten Umschaltfelds 458, wieder in die Arbitrationsphase 451 zurückgeschaltet.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Somit verwenden die Teilnehmerstationen 10, 30 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Jedoch ist im Vergleich zu CAN oder CAN FD in der Datenphase 452 als zweiter Kommunikationsphase eine Steigerung der Netto-Datenübertragungsrate, insbesondere auf über 10 Megabit pro Sekunde möglich. Außerdem ist ein Anheben der Größe der Nutzdaten pro Rahmen, insbesondere auf etwa 2kbyte oder einen beliebigen anderen Wert möglich.

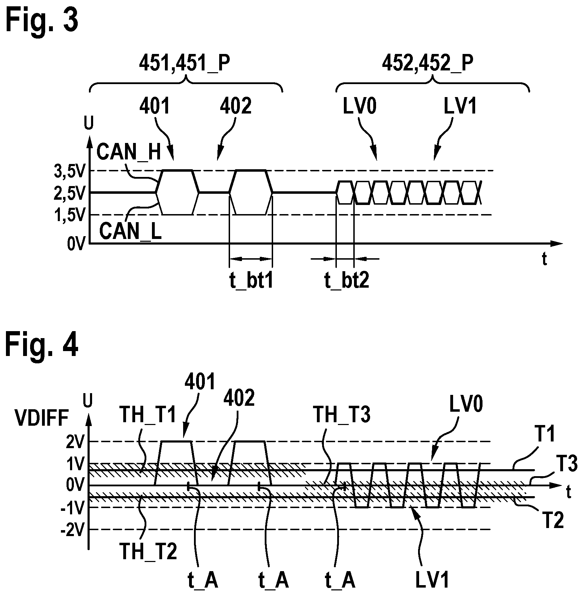

Wie in Fig. 3 gezeigt, verwenden die Sende-/Empfangseinrichtungen 12 in der Arbitrationsphase 451 einen ersten Physical Layer 451_P, um ein Sendesignal TxD (Fig. 1) über der Zeit t als Signale CAN_H, CAN_L auf den Bus 40 zu senden. Dasselbe gilt für die Sende-/Empfangseinrichtung 22. Im Unterschied dazu kann die Sende-/Empfangseinrichtung 12 in der Datenphase 452 einen zweiten Physical Layer 452_P verwenden, der sich von dem ersten Physical Layer 451_P unterscheidet, um das Sendesignal TxD (Fig. 1) als Signale CAN_H, CAN_L auf den Bus 40 zu senden, wie bereits zuvor beschrieben. Für den Physical Layer 452_P gibt es zwei Betriebsarten, nämlich FAST_TX und FAST RX, wie nachfolgend genauer beschrieben.

Fig. 3 zeigt auf der linken Seite, dass die Teilnehmerstationen 10, 20, 30 in der Arbitrationsphase 451 jeweils Signale CAN_H, CAN_L über der Zeit t auf den Bus 40 senden, die eine erste Bitdauer t_bt1 haben. Die Signale CAN_H, CAN_L sind serielle Signale und haben abwechselnd mindestens einen dominanten Zustand 401, bei dem für VCAN_H = 3,5 V und für VCAN_L = 1,5 V gilt, oder mindestens einen rezessiven Zustand 402, bei dem VCAN_H = VCAN_L = 2,5 gilt. Ein dominanter Zustand 401 (dom) wird bei einer NRZ-Codierung des Sendesignals TXD in der Phase 451 getrieben, wenn TXD = 0 bzw. LW (LOW = Niedrig) gilt. Ein rezessiver Zustand 402 (rec) wird erzeugt, bzw. stellt sich bei einer NRZ-Codierung des Sendesignals TXD in der Phase 451 ein, wenn TXD = 1 bzw. HI (HIGH) gilt. Nach der Arbitration in der Arbitrationsphase 451 steht eine der Teilnehmerstationen 10, 20, 30 als Gewinnerin fest.

Erkennt die jeweilige Teilnehmerstation 10, 20, 30 die Signalisierung in dem ersten Umschaltfeld 455 von Fig. 2 für die Umschaltung von der ersten in die zweiten Kommunikationsphase 451, 452, schaltet die zugehörige Sende-/Empfangseinrichtung 12 ihren Physical Layer 451_P am Ende der Arbitrationsphase 451 von einer ersten Betriebsart (SLOW), die alternativ als SIC-Betriebsart ausgeführt sein kann, in den Physical Layer 452_P der Datenphase 452 um. Hierfür werden die Betriebsarten der Datenphase 452 eingeschaltet, wie folgt.

Angenommen, die erste Teilnehmerstation 10 hat die Arbitration gewonnen. Dann schaltet die Sende-/Empfangseinrichtung 12 der Teilnehmerstation 10, insbesondere aufgrund einer Signalisierung im ersten Umschaltfeld 455 von Fig. 2, ihren Physical Layer 451_P am Ende der Arbitrationsphase 451 von der ersten Betriebsart (SLOW) in den Physical Layer 452_P der Datenphase 452 für eine zweite Betriebsart (FAST_TX) der Sende-/Empfangseinrichtung 12 um, da die Teilnehmerstation 10 in der Datenphase 452 Sender der Nachricht 45 ist. Wie in Fig. 3 gezeigt, erzeugt das Sendemodul 121 dann in der Datenphase 452 bzw. in der zweiten Betriebsart (FAST_TX) abhängig von einem Sendesignal TxD nacheinander und somit seriell die Zustände LV0 oder LV1 mit dem Physical Layer 452_P für die Signale CAN_H, CAN_L auf dem Bus 40. Der Zustand LV0 (VCAN_H = 3,0 V, VCAN_L = 2,0 V) wird bei einer Pulsweiten-Modulation (PWM-Codierung) des Sendesignals TXD für ein erstes PWM-Symbol in dem Sendesignal TXD getrieben. Der Zustand LV1 (VCAN_H = 2,0 V und VCAN_L = 3,0 V) wird bei der Pulsweiten-Modulation (PWM-Codierung) des Sendesignals TXD für ein zweites PWM-Symbol, das sich von dem ersten PWM-Symbol unterscheidet, in dem Sendesignal TXD getrieben.

Die Frequenz der Signale CAN_H, CAN_L kann in der Datenphase 452 gesteigert sein. Bei dem Beispiel von Fig. 3 ist hierfür die Bitzeit oder Bitdauer t_bt2 in der Datenphase 452 kürzer bzw. geringer als die Bitzeit oder Bitdauer t_bt1 in der Arbitrationsphase 451. Somit ist die Netto-Datenübertragungsrate in der Datenphase 452 bei dem Beispiel von Fig. 3 im Vergleich zu der Arbitrationsphase 451 gesteigert.

Dagegen schaltet beispielsweise die Sende-/Empfangseinrichtung 12 der Teilnehmerstation 30 ihren Physical Layer 451_P am Ende der Arbitrationsphase 451 von der ersten Betriebsart (SLOW oder SIC) in den Physical Layer 452_P der Datenphase 452 für eine dritte Betriebsart (FAST_RX) der Sende-/Empfangseinrichtung 12 um, da die Teilnehmerstation 30 in der Datenphase 452 nur Empfänger, also kein Sender, des Rahmens 450 ist.

Erkennt die Sende-/Empfangseinrichtung 12, insbesondere mit der Signalisierung in dem zweiten Umschaltfeld 458 von Fig. 2, dass eine Umschaltung von der Datenphase 452 zurück in die Arbitrationsphase 451 vorzunehmen ist, wird die Sende-/Empfangseinrichtung 12 vom Senden (Betriebsart FAST_TX) (und)oder Empfangen (Betriebsart FAST_RX) von Signalen mit dem Physical Layer 452_P umgeschaltet zum Senden und/oder Empfangen von Signalen mit dem Physical Layer 451_P. Somit schalten alle Sende-/Empfangseinrichtungen 12 nach dem Ende der Datenphase 452 ihre Betriebsart in die erste Betriebsart (SLOW oder SIC) um. Somit können alle Sende-/Empfangseinrichtungen 12 nicht nur zwischen den Bitdauern t_bt1, t_bt2 schalten, sondern auch ihren Physical Layer umschalten, wie zuvor beschrieben.

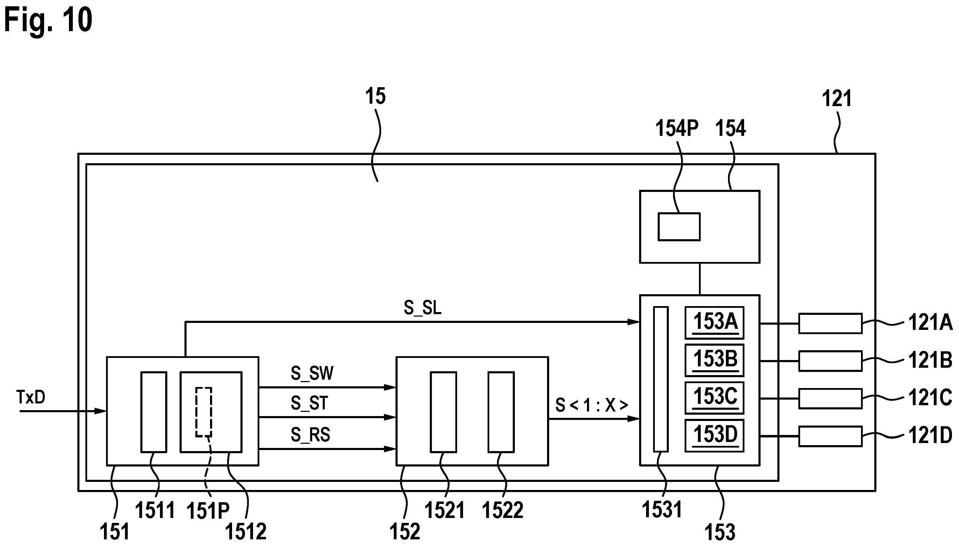

Der Verlauf der entsprechenden Signale bei der Sende-/Empfangseinrichtung 12 bei der Umschaltung von der Phase 451 zur Phase 452, während der Datenphase 452 und bei der Umschaltung von der Phase 452 zurück in die Phase 451 ist nachfolgend anhand von Fig. 10 bis Fig. 15 genauer erläutert.

Gemäß Fig. 4 bildet sich in der Arbitrationsphase 451 über der Zeit t im idealen Fall auf dem Bus 40 ein Differenzsignal VDIFF = CAN_H - CAN_L mit Werten von VDIFF = 2V für dominante Zustände 401 (dom) und VDIFF = 0V für rezessive Zustände 402 (rec) aus. Der Verlauf von VDIFF in der Phase 451 ist auf der linken Seite in Fig. 4 gezeigt. Dagegen bildet sich in der Datenphase 452 über der Zeit t auf dem Bus 40 ein Differenzsignal VDIFF = CAN_H - CAN_L entsprechend den Zuständen LV0, LV1 von Fig. 4 aus, wie auf der rechten Seite in Fig. 4 gezeigt. Der Zustand LV0 hat einen Wert VDIFF = 1V. Der Zustand LV1 hat einen Wert VDIFF = -1V.

Das Empfangsmodul 122 kann die Zustände 401, 402 jeweils mit zwei der Empfangsschwellen T1, T2, T3 unterscheiden, die in den Bereichen TH_T1, TH_T2, TH_T3 liegen. Hierfür tastet das Empfangsmodul 122 die Signale von Fig. 3 oder Fig. 4 zu Zeitpunkten t_A ab, wie in Fig. 4 gezeigt. Zum Auswerten des Abtastergebnisses verwendet das Empfangsmodul 122 in der Arbitrationsphase 451 die Empfangsschwelle T1 von beispielsweise 0,7 V und die Empfangsschwelle T2 von beispielsweise -0,35 V. Dagegen verwendet das Empfangsmodul 122 in der Datenphase 452 nur Signale, die mit der Empfangsschwelle T3 ausgewertet wurden. Bei der Umschaltung zwischen der ersten bis dritten Betriebsart (SLOW oder SIC, FAST_TX, FAST_RX), die zuvor in Bezug auf Fig. 3 beschrieben sind, schaltet das Empfangsmodul 122 jeweils die Empfangsschwellen T2, T3 um.

Die Empfangsschwelle T2 dient zum Erkennen, ob der Bus 40 frei ist, wenn die Teilnehmerstation 12 neu in die Kommunikation am Bus 40 hinzugeschaltet wird und versucht, sich in die Kommunikation am Bus 40 zu integrieren.

Bei Empfang der entsprechenden Signale von dem Bus 40 erzeugt jede Sende-/Empfangseinrichtung 12 das zugehörige Empfangssignal RxD, wie in Fig. 1 gezeigt. Das Empfangssignal RxD hat idealerweise keinen Zeitversatz zu dem Sendesignal TxD.

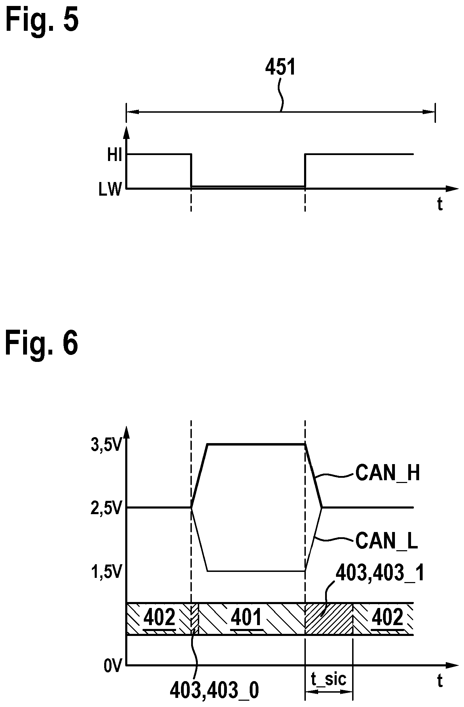

Fig. 5 zeigt ein Beispiel für einen Teil des digitalen Sendesignals TxD, welches das Sendemodul 121 in der Arbitrationsphase 451 von der Kommunikationssteuereinrichtung 11 empfängt, und daraus die Signale CAN_H, CAN_L für den Bus 40 erzeugt. In Fig. 5 wechselt das Sendesignal TxD von einem Zustand LW (Niedrig = Low) zu einem Zustand HI (Hoch = High) und wieder zurück zu dem Zustand LW (Niedrig = Low).

Wie in Fig. 6 genauer gezeigt, erzeugt das Sendemodul 121 für das Sendesignal TxD von Fig. 5 die Signale CAN_H, CAN_L für die Busadern 41, 42 derart, dass zusätzlich ein Zustand 403 (sic) vorhanden ist. Der Zustand 403 (SIC) kann unterschiedlich lang sein, wie mit dem Zustand 403_0 (SIC) beim Übergang von dem Zustand 402 (rec) zu dem Zustand 401 (dom) gezeigt und dem Zustand 403_1 (sic) beim Übergang von dem Zustand 401 (dom) zu dem Zustand 402 (rec) gezeigt. Der Zustand 403_0 (sic) ist zeitlich kürzer als der Zustand 403_1 (sic). Um Signale gemäß Fig. 6 zu erzeugen, wird das Sendemodul 121 in eine SIC-Betriebsart (SIC-Mode) geschaltet.

Das Durchlaufen des kurzen sic-Zustands 403_0 ist in der CiA610-3 nicht gefordert und der Zustand ist abhängig von der Art der Implementierung. Die zeitliche Dauer des "langen" Zustands 403_1 (sic) ist für CAN-SIC als auch für die SIC-Betriebsart bei CAN-XL spezifiziert als t_sic < 530ns, beginnend mit der steigenden Flanke an dem Sendesignal TxD von Fig. 5.

Das Sendemodul 121 soll in dem "langen" Zustand 403_1 (SIC) die Impedanz zwischen den Busadern 41 (CANH) und 42 (CANL) möglichst gut an den charakteristischen Wellenwiderstand Zw der verwendeten Busleitung anpassen. Hierbei gilt Zw=100Ohm oder 120Ohm. Diese Anpassung verhindert Reflexionen und lässt somit den Betrieb bei höheren Bitraten zu. Zur Vereinfachung wird nachfolgend immer von dem Zustand 403 (sic) oder sic-Zustand 403 gesprochen.

Das Sendemodul 121 kann zur Erzeugung von Signalen für den Bus 40 für die folgenden CAN-Typen verwendet werden: CAN-FD, CAN-SIC und CAN-XL.

**Tabelle 1: CAN_Typen für Sendemodul 121**

| CAN-Typ | Kommunikationsphasen/Bitrate | Buszustände (Bus states) | Sendemodul-Zustände |
|---|---|---|---|
| CAN-FD | Arbitration | dom, rec | dom, rec |
| CAN-SIC | Arbitration | dom, sic, rec | dom, sic, rec |
| CAN-XL | Arbitration oder Arbitration und Datenfeld für den Fall, dass keine Umschaltung in die Fast-Betriebsart stattfindet | dom, sic, rec | dom, sic, rec |
| CAN-XL | Datenphase | LV0, LV1 | LV0, LV1 |

Somit kann der Sendemodul-Zustand 403 (sic) nicht nur bei CAN-SIC oder CAN-XL (xl_sic) erzeugt werden. Der Sendemodul-Zustand 403 (sic) kann zudem bei CAN-FD erzeugt werden. In CAN-FD kann die Zeit für den Sendemodul-Zustand 403 (sic) jedoch kürzer sein als bei CAN-SIC oder CAN-XL.

Das Sendemodul 121 kann somit bei CAN FD zwei verschiedene Buszustände, bei CAN SIC drei verschiedene Buszustände und bei CAN XL fünf verschiedene Zustände erzeugen.

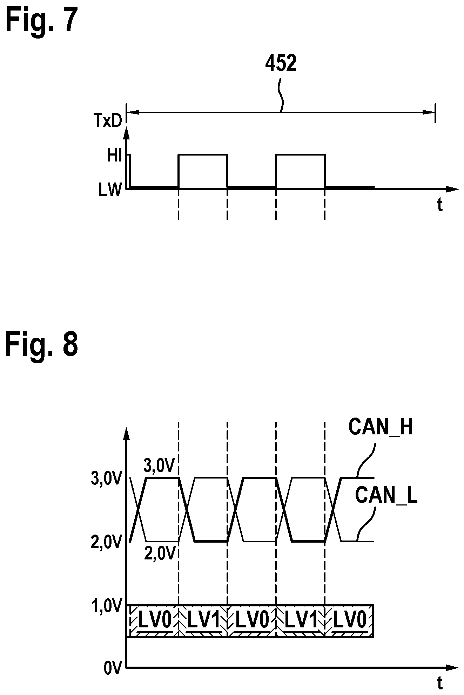

Fig. 7 zeigt ein Beispiel für einen anderen Teil des digitalen Sendesignals TxD, welches das Sendemodul 121 in der Datenphase 452 von der Kommunikationssteuereinrichtung 11 empfängt, und daraus die Signale CAN_H, CAN_L für den Bus 40 erzeugt. In Fig. 7 wechselt das Sendesignal TxD mehrmals von Zustand HI (Hoch = High) zu einem Zustand LW (Niedrig = Low) und wieder zu einem Zustand HI (Hoch = High) und so weiter.

Wie in Fig. 8 genauer gezeigt, erzeugt das Sendemodul 121 für das Sendesignal TxD von Fig. 7 die Signale CAN_H, CAN_L für die Busadern 41, 42 derart, dass sich der Zustand LV0 für einen Zustand LW (Niedrig = Low) ausbildet. Zudem bildet sich der Zustand LV1 für einen Zustand HI (Hoch = High) aus.

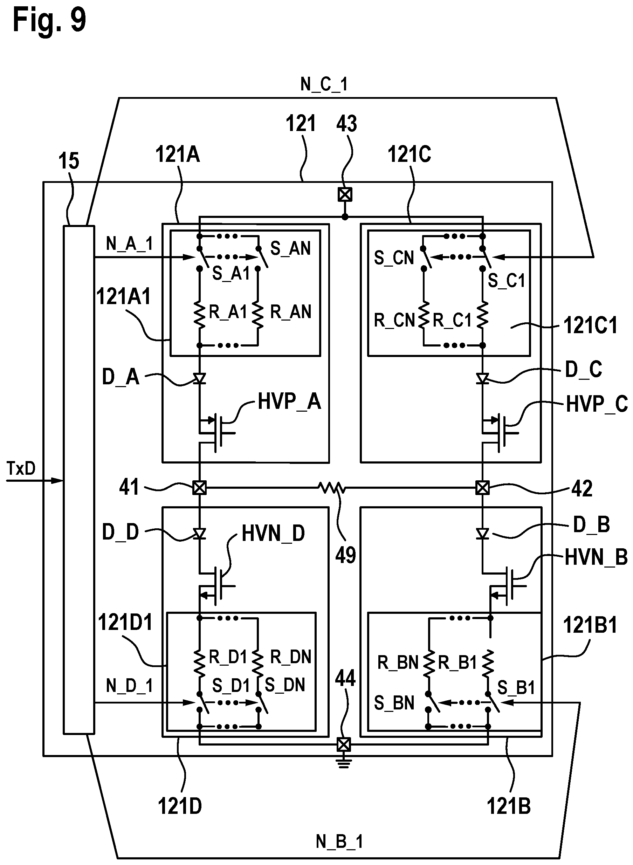

Fig. 9 zeigt das Sendemodul 121 für die Sende-/Empfangseinrichtung 12 genauer, die für eine der Teilnehmerstationen 10, 30 verwendbar ist. Das Sendemodul 221 für die Sende-/Empfangseinrichtung 22 kann auf dieselbe Weise aufgebaut sein wie das Sendemodul 121 für die Sende-/Empfangseinrichtung 12. Daher ist das Sendemodul 221 nicht separat beschrieben.

Das Sendemodul 121 ist an den Bus 40 angeschlossen, genauer gesagt dessen erste Busader 41 für CAN_H oder CAN-XL_H oder LINE+ und dessen zweite Busader 42 für CAN_L oder CAN-XL_L oder LINE-. Jede der Sendestufen 121A bis 121D ist an den Bus 40 angeschlossen.

Das Sendemodul 121 von Fig. 9 kann beispielsweise die Signale CAN_H, CAN_L gemäß Fig. 6 mit den Zuständen 401, 402, 403 und Signale CAN_H, CAN_L gemäß Fig. 8 mit den Zuständen LV0, LV1 erzeugen.

Das Sendemodul 121 hat eine erste bis vierte Sendestufe 121A, 121B, 121C, 121D und ein Steuerteil 15. Wie in Fig. 9 gezeigt, sind die Sendestufen 121A bis 121D als Vollbrücke verschaltet. Das Steuerteil 15 dient zum Ansteuern der Sendestufen 121A, 121B, 121C, 121D gemäß dem Sendesignal TxD und der eingestellten Betriebsart SIC, FAST_TX des Sendemoduls 121. Hierfür erzeugt das Steuerteil 15 mindestens ein Signal N_A_1 zum Ansteuern der ersten Sendestufe 121A, mindestens ein Signal N_B_1 zum Ansteuern der zweiten Sendestufe 121B, mindestens ein Signal N_C_1 zum Ansteuern der dritten Sendestufe 121C und mindestens ein Signal N_D_1 zum Ansteuern der vierten Sendestufe 121D. Dies ist in Bezug auf Fig. 10 bis Fig. 12 noch genauer beschrieben.

Über mindestens einen Anschluss 43 erfolgt die Spannungsversorgung zum Versorgen der ersten und zweiten Busader 41, 42 mit elektrischer Energie, insbesondere mit der Spannung CAN-Supply von üblicherweise 5V. Die Verbindung mit Masse, insbesondere CAN_GND, ist über einen Anschluss 44 realisiert. Die erste und zweite Busader 41, 42 sind mit einem Abschlusswiderstand 49 terminiert. Der Abschlusswiderstand 49 ist in die Vollbrücke als externer Lastwiderstand geschaltet. Der Widerstand 49 ist in den Brückenzweig zwischen die Anschlüsse für die Busadern 41, 42 geschaltet.

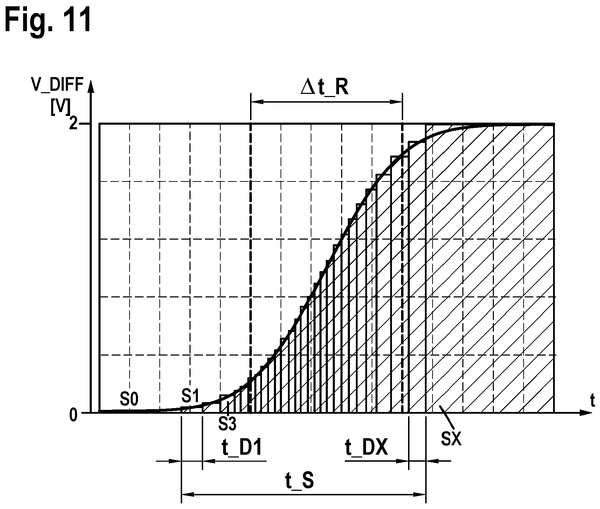

Die erste Sendestufe 121A von Fig. 9 hat eine Verpoldiode D_A, einen Transistor HVP_A, und eine Parallelschaltung 121A1, bei der eine Serienschaltung aus einem ersten Schalter S_A1 und einem ersten Widerstand R_A1 parallel zu mindestens einer Serienschaltung aus einem N-ten Schalter S_AN und einem N-ten Widerstand R_AN für eine erste bis N-te Stromstufe geschaltet sind, wie genauer in Fig. 11 gezeigt und nachfolgend beschrieben, wobei N eine natürliche Zahl > 1 ist. In Bezug auf die Sendestufe 121A ist die Zahl N nachfolgend auch als N_A bezeichnet. Der Transistor HVP_A ist ein CMOS-Transistor, insbesondere PMOS-Transistor, dessen Ansteuerung in Fig. 9 zur Vereinfachung der Zeichnung nicht genauer dargestellt ist. Die Abkürzung "CMOS" bezeichnet ein Halbleiterelement, bei dem sowohl p-Kanal- als auch n-Kanal-MOSFETs auf einem gemeinsamen Substrat verwendet werden. Die Abkürzung CMOS steht für die englische Bezeichnung "Complementary metal-oxide-semiconductor", was übersetzt bedeutet "komplementärer / sich ergänzender Metall-Oxid-Halbleiter". Die Abkürzung "MOSFET" steht für Metall-Oxid-Feldeffekttransistor.

Die zweite Sendestufe 121B von Fig. 9 hat eine Verpoldiode D_B, einen Transistor HVN_B, und eine Parallelschaltung 121B1, bei der eine Serienschaltung aus einem ersten Schalter S_B1 und einem ersten Widerstand R_B1 parallel zu mindestens einer Serienschaltung aus einem N-ten Schalter S_BN und einem N-ten Widerstand R_BN für eine erste bis N-te Stromstufe geschaltet sind, wobei N die natürliche Zahl > 1 ist. In Bezug auf die Sendestufe 121B ist die Zahl N nachfolgend auch als N_B bezeichnet. Der Transistor HVN_B ist ein CMOS-Transistor, insbesondere NMOS-Transistor, dessen Ansteuerung in Fig. 9 zur Vereinfachung der Zeichnung nicht genauer dargestellt ist.

Die dritte Sendestufe 121C von Fig. 9 hat eine Verpoldiode D_C, einen Transistor HVP_C, und eine Parallelschaltung 121C1, bei der eine Serienschaltung aus einem ersten Schalter S_C1 und einem ersten Widerstand R_C1 parallel zu mindestens einer Serienschaltung aus einem N-ten Schalter S_CN und einem N-ten Widerstand R_CN für eine erste bis N-te Stromstufe geschaltet sind, wobei N die natürliche Zahl > 1 ist. In Bezug auf die Sendestufe 121C ist die Zahl N nachfolgend auch als N_C bezeichnet. Der Transistor HVP_C ist ein CMOS-Transistor, insbesondere PMOS-Transistor, dessen Ansteuerung in Fig. 9 zur Vereinfachung der Zeichnung nicht genauer dargestellt ist.

Die vierte Sendestufe 121D von Fig. 9 hat eine Verpoldiode D_D, einen Transistor HVN_D, und eine Parallelschaltung 121D1, bei der eine Serienschaltung aus einem ersten Schalter S_D1 und einem ersten Widerstand R_D1 parallel zu mindestens einer Serienschaltung aus einem N-ten Schalter S_DN und einem N-ten Widerstand R_DN für eine erste bis N-te Stromstufe geschaltet sind, wobei N die natürliche Zahl > 1 ist. In Bezug auf die Sendestufe 121D ist die Zahl N nachfolgend auch als N_D bezeichnet. Der Transistor HVN_D ist ein CMOS-Transistor, insbesondere NMOS-Transistor, dessen Ansteuerung in Fig. 9 zur Vereinfachung der Zeichnung nicht genauer dargestellt ist.

Jede Serienschaltung der Parallelschaltungen 121A1, 121B1, 121C1, 121D1 implementieren eine Stromstufe S1 bis SN der Sendestufen 121A bis 121D. Hierfür sind die Stromstufen S1 bis SN der Sendestufen 121A bis 121D als Widerstandsstufen ausgestaltet, die auch Widerstandsfinger genannt werden können. Die Widerstandsstufen werden durch Wahl des Widerstandswerts der jeweiligen Stromstufe eingestellt, beispielsweise durch Wahl der Widerstände R_A1 bis R_AN für die Sendestufe 121A, usw.. Als Folge der Einstellung der Widerstandswerte der Widerstände stellen sich die von der zugehörigen Sendestufe 121A bis 121D erzeugten Ströme und somit Stromstufen ein. Die Zahl N ist beliebig wählbar. Insbesondere kann die Zahl N und somit die Stufenzahl bzw. Zahl der Widerstandsstufen oder Stromstufen zwischen 1 bis 60 gewählt werden. Alternativ kann jedoch für N eine größere Zahl als 60 gewählt werden.

Jede der Verpoldioden D_A, D_B, D_C, D_D schützt die zugehörige Sendestufe gegen eine positive Rückspeisung auf den Anschluss 44 (CAN-Supply) und eine negative Rückspeisung auf den Anschluss 43 (CAN_GND). Jede der Verpoldioden D_A, D_B, D_C, D_D kann auch als Blocking Diode bezeichnet werden.

Jede der Parallelschaltungen 121A1, 121B1, 121C1, 121D1, genauer gesagt mit Ansteuerung durch das Steuerteil 15, stellen/stellt einen Widerstandswert für die zugehörige Sendestufe 121A, 121B, 121C, 121D in Abhängigkeit der Betriebsart (SLOW oder SIC, FAST_TX) des Sendemoduls 121 und des Sendesignals TxD ein. Der Widerstandswert der einzelnen Sendestufe 121A, 121B, 121C, 121D ist somit je nach Betriebsart (SLOW oder SIC, FAST_TX) des Sendemoduls 121 und des Sendesignals TxD einstellbar. Dies ist nachfolgend noch genauer anhand von Fig. 10 bis Fig. 12 sowie Tabelle 2 und Tabelle 3 beschrieben.

Jeder der Transistoren HVP_A, HVN_B, HVP_C, HVN_D ist eine HV-Kaskode und kann auch als HV-Standoff-Vorrichtung bezeichnet werden. Der Transistor HVP_A schützt die Parallelschaltung 121A1, indem der Transistor HVP_A hohe Spannungsabfälle aufnimmt. Jeder der Transistoren HVN_B, HVP_C, HVN_D hat dieselbe Funktion für die jeweils zugeordnete Parallelschaltung 121 B1, 121C1, 121D1. Jeder der Transistoren HVP_A, HVN_B, HVP_C, HVN_D ist an seinem Steueranschluss entsprechend steuerbar, insbesondere von dem Steuerteil 15 oder einer anderen nicht dargestellten Steuereinrichtung.

Bei dem Sendemodul 121 ist die Sendestufe 121A zwischen den Anschluss 43 für die Spannungsversorgung und den Anschluss 41 (CANH) für das Signal CAN_H geschaltet. Die Sendestufe 121C ist zwischen den Anschluss 43 für die Spannungsversorgung und den Anschluss 42 (CANL) für das Signal CAN_L und den Anschluss 43 für Masse bzw. den Anschluss 44 (CAN_GND) geschaltet. Die Sendestufe 121D ist zwischen den Anschluss 41 (CANH) für das Signal CAN_H und den Anschluss 43 für Masse bzw. den Anschluss 44 (CAN_GND) geschaltet. Die Sendestufe 121B ist zwischen den Anschluss 42 (CANL) für das Signal CAN_L und den Anschluss 43 für Masse bzw. den Anschluss 44 (CAN_GND) geschaltet. Somit ist bei dem Sendemodul 121 zum einen die Sendestufe 121A in den CANH-Pfad geschaltet. Zum anderen ist die Sendestufe 121D in den CANH-Pfad geschaltet. In den CANL-Pfad ist zum einen die Sendestufe 121C geschaltet. Zum anderen ist die Sendestufe 121B in den CANL-Pfad geschaltet.

Die Signale CAN_H, CAN_L bilden das differentielle Signal, das von dem Sendemodul 121 auf den Bus 40 gesendet wird.

Somit besteht das Sendemodul 121 im CANH-Pfad und im CANL-Pfad aus einer Parallelschaltung 121A1, 121B1, 121C1, 121D1 einer vorbestimmten Anzahl von Stromstufen bzw. Widerstandsfingern, wie zuvor beschrieben. Die Parallelschaltung aller Stromstufen ist im CANH-Pfad und im CANL-Pfad in Serie mit einer HV-Kaskode HVP_A, HVN_B, HVP_C, HVN_D und einer Verpoldiode D_A, D_B, D_C, D_D geschaltet, wie zuvor beschrieben. Die HV-Kaskoden HVP_A, HVN_B, HVP_C, HVN_D ermöglichen die Einhaltung von Grenzwerten (maximum rating Parametern), wie Spannung an CANH und CANL -27V bis +40V.

Die prinzipielle Funktionsweise der Schaltung von Fig. 9 in Abhängigkeit von der Betriebsart des Sendemoduls 121 und dem Buszustand 401 (dom), 403 (sic), 402 (rec) in der SIC-Betriebsart (Arbitrationsphase 451) und LV0, LV1 in der Datenphase 452 ist anhand von Fig. 10 bis Fig. 12 und der folgenden Tabellen 2, 3 erläutert.

Fig. 10 zeigt das Steuerteil 15 des Sendemoduls 121 für die Sende-/Empfangseinrichtung 12 genauer, das für die Teilnehmerstationen 10, 30 des Bussystems 1 verwendbar ist. Die Sende-/Empfangseinrichtung 22 für die Teilnehmerstation 20 kann auf dieselbe Weise aufgebaut sein, wie nachfolgend für die Sende-/Empfangseinrichtung 12 beschrieben.

Das Steuerteil 15 hat einen Zustandsbearbeitungsblock 151, einen Schrittgenerator 152, einen Logikblock 153 und einen Speicherblock 154. In das Steuerteil 15 wird das Sendesignal TxD eingegeben. Das Steuerteil 15 bildet daraus ein Ansteuersignal für die Sendestufen 121A bis 121D. Der Zustandsbearbeitungsblock 151, der Schrittgenerator 152, und der Logikblock 153 bilden eine Ansteuerkette oder Kette zum schrittweisen Erzeugen der Sendeströme des Sendemoduls 121, die für einen emissionsarmen Übergang zwischen zwei Bussignalzuständen bzw. Buszuständen 401, 402, 403, LV0, LV1 erforderlich sind.

In Fig. 10 hat der Zustandsbearbeitungsblock 151 eine Auswerteeinheit 1511 und eine Signalerzeugungseinheit 1512. Die Auswerteeinheit 1511 wertet das Sendesignal TxD in Bezug darauf aus, welchen derzeitigen Signalzustand das digitale Sendesignal TxD hat und welche Betriebsart für das Sendemodul 121 geschaltet ist. Das Auswerteergebnis der Auswerteeinheit 1511 für ein empfangenes Sendesignal TxD gemäß Fig. 5 oder Fig. 7 kann also HI (hoch = high) oder LW (niedrig = low) sein. Aus der Betriebsart (SIC, FAST_TX), in welche das Sendemodul 121 geschaltet ist, ergibt sich dann, welcher der Bussignalzustände bzw. Buszustände 401, 402, 403, LV0, LV1 zu erzeugen ist. Zudem kann die Auswerteeinheit 1511 auswerten, ob sich der Signalzustand des digitalen Sendesignals TxD im Vergleich zu dem vorhergehenden Signalzustand des digitalen Sendesignals TxD geändert hat und/oder ob sich die Betriebsart des Sendemoduls 121 geändert hat.

Die Signalerzeugungseinheit 1512 ist zum Erzeugen von Signalen S_SL, S_SW, S_ST ausgestaltet, wenn das Auswerteergebnis der Auswerteeinheit 1512 ergibt, dass ein Schalten zwischen zwei der Buszustände 401, 402, 403, LV0, LV1 vorzunehmen ist und somit ein Übergang zwischen zwei der Buszustände 401, 402, 403, LV0, LV1 zu erzeugen ist. Demzufolge erzeugt die Signalerzeugungseinheit 1512 abhängig von der Auswertung der Auswerteeinheit 1511 ein Auswahlsignal S_SL, ein Anstiegsratesignal S_SW und ein Schrittstartsignal S_ST. Die Signale S_SL, S_SW, S_ST sind je nach Art des Übergangs unterschiedlich, also beispielsweise von dem Zustand 401 (dom) zu dem Zustand 403 (sic). Optional erfolgt die Erzeugung mindestens eines der Signale S_SL, S_SW, S_ST unter Verwendung von Parametern 151P. Die Parameter 151P können in der Signalerzeugungseinheit 1512 gespeichert sein oder sind durch Zugriff auf den Speicherblock 154 verfügbar.

Die Signalerzeugungseinheit 1512 gibt das Auswahlsignal S_SL an den Logikblock 153 aus. Im Unterschied dazu gibt die Signalerzeugungseinheit 1512 das Anstiegsratesignal S_SW, das Schrittstartsignal S_ST und das Rücksetzsignal S_RS an den Schrittgenerator 152 aus.

Ist die Steuerung eines Übergangs zwischen den zwei Bussignalzuständen abgeschlossen, beispielsweise für einen Übergang von dem Zustand 401 (dom) zu dem Zustand 403 (sic), erzeugt die Signalerzeugungseinheit 1512 ein Rücksetzsignal S_RS.

Der Schrittgenerator 152 hat eine Auswerteeinheit 1521 und eine Signalerzeugungseinheit 1522. Die Auswerteeinheit 1521 wertet das Anstiegsratesignal S_SW und das Schrittstartsignal S_ST aus. Die Signalerzeugungseinheit 1522 erzeugt auf der Grundlage dieser Auswertung ein Schrittsignal S<1:X> und gibt dieses an den Logikblock 153 aus, wie nachfolgend noch genauer beschrieben. X ist eine beliebige natürliche Zahl größer 1. Das Schrittsignal S<1:X> ist zum schrittweisen Verändern der Widerstandswerte und somit der Sendeströme der Sendestufen 121A, 121B, 121C, 121D des Sendemoduls 121 ausgestaltet.

Der Logikblock 153 kann als programmierbare Logik ausgestaltet sein. Der Logikblock 153 steuert die Sendestufen 121A, 121B, 121C, 121D des Sendemoduls 121 insbesondere unter Verwendung von Steuereinheiten 153A, 153B, 153C, 153D und von Parametern 154P an. Die Parameter 154P sind in dem Speicherblock 154 gespeichert. Die Steuereinheit 153A ist zur Ansteuerung der Sendestufe 121A, insbesondere ihrer Parallelschaltung 121A1 ausgestaltet. Die Steuereinheit 153B ist zur Ansteuerung der Sendestufe 121B, insbesondere ihrer Parallelschaltung 121B1, ausgestaltet. Die Steuereinheit 153C ist zur Ansteuerung der Sendestufe 121C, insbesondere ihrer Parallelschaltung 121C1, ausgestaltet. Die Steuereinheit 153D ist zur Ansteuerung der Sendestufe 121D, insbesondere ihrer Parallelschaltung 121D1, ausgestaltet.

In dem Speicherblock 154 sind für alle erlaubten Übergänge zwischen Signalzuständen auf dem Bus 40 für jeden Schritt im Übergang Sollwerte, insbesondere als Parameter 154P, für die Parallelschaltungen 121A1, 121B1, 121C1, 121D1 von Fig. 9 gespeichert. Bei einem CAN-Bussystem sind die Übergänge zum Beispiel der Übergang von dem Zustand 401 (dom) zu dem Zustand 403 (sic), der Übergang von dem Zustand 403 (sic) zu dem Zustand 401 (dom), der Übergang von dem Zustand LV0 zu dem Zustand LV1 und der Übergang von dem Zustand LV1 zu dem Zustand LV0 und so weiter.

Der Logikblock 153 ist ausgestaltet, eine Ansteuerung vorzunehmen, welche die Sollwerte für die Parallelschaltungen 121A1, 121B1, 121C1, 121D1 von Fig. 9 einstellt. Die Sollwerte, die für die Parallelschaltungen 121A1, 121B1, 121C1, 121D1 von Fig. 9 in den Parametern 154P gespeichert sind, können beliebig derart angepasst werden, dass insbesondere die Emissionen des Sendemoduls 121 gering sind, so dass die Anforderungen für die elektromagnetische Verträglichkeit (EMV) des Sendemoduls 121 eingehalten werden.

Die nachfolgenden Tabellen 2, 3 zeigen ein Beispiel für Sollwerte, die in dem Speicherblock 154 gespeichert sein können. Bei dem Beispiel der Tabellen 2, 3 steuert der Logikblock 153 die Parallelschaltungen 121A1, 121B1, 121C1, 121 D1 von Fig. 9 derart an, dass die Parallelschaltungen 121A1, 121B1, 121C1, 121D1 von Fig. 9 nacheinander 30 unterschiedliche Widerstandswerte R_A, R_B, R_C, R_D annehmen. Infolge dessen stellen sich für jeden der 30 Schritte S1 bis S30 unterschiedliche Differenzwiderstände R_DIFF bzw. Impedanzen der Sendestufen 121A/121B und 121C/121D und unterschiedliche Differenzspannungen VDIFF auf dem Bus 40 ein, wie in Tabelle 2 angegeben. Dadurch wird der Übergang 401 nach 403 in 30 Schritten S1 bis S30 vollzogen. Tabelle 3 gibt hierfür die Anzahl N_A der aktiv geschalteten Widerstandsfinger für die Sendestufe 121A, die Anzahl N_B der aktiv geschalteten Widerstandsfinger für die Sendestufe 121B, die Anzahl N_C der aktiv geschalteten Widerstandsfinger für die Sendestufe 121C, und die Anzahl N_D der aktiv geschalteten Widerstandsfinger für die Sendestufe 121D des Sendemoduls 121 an.

Die Schritte S1 bis S30 sind nachfolgend auch als Zwischenzustände auf dem Bus 40 bezeichnet.

**Tabelle 2: Beispiel elektrische Sollwerte für Übergang 401 nach 403 in 30 Schritten S1 bis S30 bzw. S1, ... S30 gemäß der Anzahl der Widerstandsfinger von Tabelle 3**

| **Zustand** | **Schritt /Zwischenzustand** | **V_DIFF (V)** | **R_DIFF (Ohm)** | **R_A (Ohm)** | **R_B (Ohm)** | **R_C (Ohm)** | **R_D (Ohm)** |
|---|---|---|---|---|---|---|---|
| **401 (dom)** | S0 | 2 | 40 | 20 | 20 | unendlich | unendlich |
| Zwischenzustand | S1 | 1,96 | 41 | 21 | 21 | 7k | 7k |
| ZwischenZustand | S2 | 1,9 | 43 | 22 | 22 | 2.3k | 2.3k |
| Zwischenzustand | ... | ... | ... | ... | ... | ... | ... |
| Zwischenzustand | S29 | 0,03 | 99 | 96 | 96 | 101 | 101 |
| **403 (sic)** | S30 | 0 | 100 | 100 | 100 | 100 | 100 |

**Tabelle 3: Beispiel Anzahl Widerstandsfinger in Parallelschaltungen 121A1, 121B1, 121C1, 121D1 von Fig. 9 für Übergang 401 nach 403 in 30 Schritten S1 bis S30 bzw. S1, ... S30 bei CAN XL für Einzelwiderstandsfinger mit R_finger = 10 kOhm, Verpoldiodenschutzspannungen von 0,7V, Energieversorgungsspannung Vcc = 5V an Anschluss 43 und einer Impedanz Z_Bus = 50 Ohm für den Widerstand 49**

| **Zustand** | **Schritt /Zwischen-zustand** | **N_A** | **N_B** | **N_C** | **N_D** |
|---|---|---|---|---|---|
| **401 (dom)** | S0 | 500 | 500 | 0 | 0 |
| Zwischenzustand | S1 | 485 | 485 | 1 | 1 |
| ZwischenZustand | S2 | 461 | 461 | 4 | 4 |
| Zwischenzustand | ... | ... | ... | ... | ... |
| Zwischenzustand | S29 | 104 | 104 | 98 | 98 |
| **403 (sic)** | S30 | 100 | 100 | 100 | 100 |

Im Betrieb des Sendemoduls 121 wird im Zustandsbearbeitungsblock 151 anhand des Sendesignals TxD am Eingang entschieden, insbesondere mit der Auswerteeinheit 1511, wann welcher Übergang durchgeführt wird.

Um einen Übergang, insbesondere von dem Buszustand 401 (dom) zu dem Buszustand 403 (sic) einzuleiten, wird zunächst durch das Auswahlsignal S_SL in dem Logikblock 153 die entsprechende Kombinatorikschaltung für die Anzahl N_A, N_B, N_C und N_D der Widerstände R_A1 usw. in den Parallelschaltungen 121A1, 121B1, 121C1, 121D1 ausgewählt. Zudem, insbesondere gleichzeitig, wird für den kommenden Übergang die gewünschte Signal-Anstiegsrate (Slew-Rate) für das Bussignal (CAN_H; CAN_L) gemäß der Vorgabe des Anstiegsratesignals S_SW eingestellt und die Kette, insbesondere der Schrittgenerator 152, über das Rücksetzsignal S_RS auf einen Ausgangswert zurückgesetzt.

Die Schaltung von Fig. 10 bildet somit eine Verzögerungskette, welche nacheinander die genannten Schritte S1 bis SX in eine Richtung durchläuft. Dadurch ist die Schaltung eines Übergangs vereinfacht. Zudem ist die Stromaufnahme im Vergleich zu einer Schaltung gesenkt, die mehr als eine Verzögerungskette hat, insbesondere mit 3 Verzögerungsketten oder 3 mal 2 Verzögerungsketten, wie in Bezug auf den Stand der Technik zuvor beschrieben.

Der Zustandsbearbeitungsblock 151 ist ausgestaltet, das Schrittstartsignal S_ST derart zu erzeugen, dass der Schrittgenerator 152 erst nach einer vorbestimmten Verzögerungszeit gestartet wird, um den Übergang zwischen den Buszuständen zu vollziehen. Somit wird die Verzögerungskette erst nach einer vorbestimmten Verzögerungszeit gestartet oder angestoßen, um den Übergang zwischen den zwei aufeinanderfolgenden Buszuständen zu vollziehen. Beispielsweise ist die vorbestimmte Verzögerungszeit etwa 1 ns, insbesondere eine Zeit zwischen 1 ns bis 5 ns. Die vorbestimmte Verzögerungszeit stellt sicher, dass sowohl der Schrittgenerator 152 als auch der Logikblock 153 bereit sind, den gewünschten Übergang zwischen den Buszuständen zu vollziehen.

Der Schrittgenerator 152, insbesondere seine Signalerzeugungseinheit 1522 erzeugt somit die Steuersignale bzw. Schrittsignale für die Schritte S1, ..., SX, welche Signale mit Zeitabständen t_D1,..., t_DX nacheinander ihren Zustand wechseln, insbesondere auf HI (hoch = high).

Fig. 11 zeigt ein Beispiel für einen Verlauf der Busspannung U im Verhältnis zu der Maximalspannung Um des Übergangs, der von dem Steuerteil 15 von Fig. 10 für die Sendestufe 121 zwischen den Zuständen 401 (dom) und 403 (sic) gesteuert wird. Bei dem in Fig. 11 gezeigten Beispiel steuert das Steuerteil 15 den Übergang über der Zeit t in Schritten S1, ..., SX und Zeitabständen t_D1,..., t_DX an. Der Übersichtlichkeit halber sind in Fig. 11 nicht alle Schritte S1 bis SX, die Zwischenzuständen am Bus 40 entsprechen, und Zeitabstände t_D1,..., t_DX beschriftet.

Das Beispiel von Fig. 11 zeigt eine asynchrone Zeitschrittgenerierung für die Erzeugung des Übergangs zwischen den Bussignalzuständen 401 (dom), 403 (sic). Eine solche Zeitschrittgenerierung mittels des Steuerteils 15 gibt asynchron eine feste Form von Zeitschritten S1, ..., SX für den Übergang vor, welche als einzelne Signale für jeden der Zwischenzustände oder Schritte S1, ... , SX den Ausgang des Schrittgenerators 152 und des Steuerteils 15 bilden. Daraus resultiert außerdem eine vorbestimmte Anstiegszeit Δt_R der Flanke zwischen den beiden Zuständen am Bus 40.

Das Verhältnis der Länge eines Zeitschrittes t_Dn zur Gesamtschaltzeit t_S = t_D1 + ... + t_DX ist konstant. In der Mitte (dem steilsten Teil der Kurve) sind die Zeitschritte kurz und am Anfang und Ende länger. Die Gesamtlänge t_S des Übergangs kann durch die Einstellung eines Bias-Stroms vorgenommen werden, um die Anstiegsrate (Slew-Rate) des Übergangs einzustellen.

Der Verlauf des Übergangs zwischen zwei Zuständen der Zustände 401, 402, 403, LV0, LV1 kann frei wählbar eingestellt werden bzw. sein. Durch längere Zeitschritte t_D1, ... t_DX am Anfang und Ende des Übergangs bzw. der Sequenz als in der Mitte kann ein spektral optimaler "glatter" Gesamtübergang von einem Zustand in den anderen angenähert werden.

Der Vorteil der zuvor beschriebenen asynchronen Schrittkette für das Sendemodul 121 im Vergleich zu einer von einem regelmäßigen Taktsignal gesteuerten synchronen Schrittkette liegt vor allem darin, dass die beschriebene Schrittkette des Sendemoduls 121 signifikant besseres Emissionsverhalten aufweist.

Grund dafür ist, dass sich die hochfrequenten spektralen Komponenten der Signale auf dem Bus 40 gleichmäßiger über den Frequenzbereich verteilen anstatt sich auf ganzzahlige Vielfache der Taktfrequenz zu konzentrieren. Für die gleiche Anzahl Schritte pro Übergang bzw. der Schrittsequenz ist das Maximum des Spektrums über den hochfrequenten Bereich von 100MHz-3GHz signifikant geringer.

Die Geschwindigkeit der Schrittkette definiert dann, in welcher Zeit dieser Übergang zwischen den Zuständen erfolgt. Die Geschwindigkeit der Übergänge 401, 402, 403, LV0, LV1 ist nur durch die maximale Schaltgeschwindigkeit der verwendeten Widerstandsfinger der Sendestufen 121A, 121B, 121C, 121D limitiert.

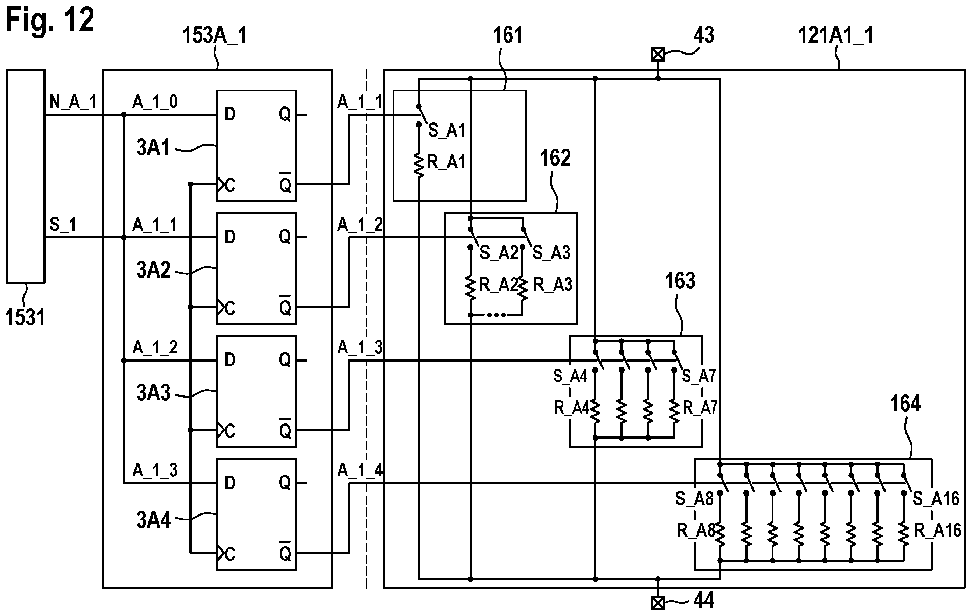

Um einen Übergang gemäß Fig. 11 auf dem Bus 40 zu erzeugen, hat jedes der vier Widerstandsarrays oder Parallelschaltungen 121A1, 121B1, 121C1, 121D1 in der H-Brücke von Fig. 9 einzelne Widerstandszellen, für welche jeweils im Logikblock 153 eine Steuerzelle vorgesehen ist, wie anhand von Fig. 12 beschrieben.

Fig. 12 zeigt für die Parallelschaltung 121A1 für den Zwischenzustand oder Zeitschritt S1 ein Beispiel für eine der Widerstandszellen 121A1_1 und eine korrespondierende Steuerzelle 153A_1 für den Zeitschritt S1. Für jeden Zeitschritt S1, ..., SX gibt es pro Parallelschaltung 121A1, 121B1, 121C1, 121D1 eine Widerstandszelle 121A1_1 sowie eine korrespondierende Steuerzelle 153A_1, wie in Fig. 12 gezeigt. Alle Steuerzellen 153A_1 für die Schritte S2 bis SX sind identisch aufgebaut.

Dementsprechend hat das Sendemodul 121 insgesamt 30 Widerstandszellen 121A1_1 pro einzelner Sendestufe 121A1, 121B1, 121C1, 121D1. Somit hat jede Parallelschaltung 121A1, 121B1, 121C1, 121D1 insgesamt 30 Widerstandszellen 121A1_1. Bei dem vorliegenden Beispiel zum Ansteuern von 30 Zeitschritten hat das Sendemodul 121 also 4 mal 30 = 120 Widerstandszellen 121A1_1 sowie 4 mal 30 = 120 Steuerzellen 153A_1.

Gemäß Fig. 12 hat die Widerstandszelle 121A1_1 binär gewichtete schaltbare Widerstandselemente S_A1, R_A1 usw., die in Widerstandsblöcken 161, 162, 163, 164 verschaltet sind. Die Widerstandswerte der Widerstandselemente S_A1, R_A1 usw. und/oder der Widerstandsblöcke 161, 162, 163, 164 sind für die einzelne Widerstandszelle 121A1_1 je nach Bedarf wählbar. Die Widerstandswerte der Widerstandselemente S_A1, R_A1 usw. und der Widerstandsblöcke 161, 162, 163, 164 können für die Widerstandszellen 121A1_1 der einzelnen Sendestufen 121A1, 121B1, 121C1, 121D1 identisch oder zumindest teilweise unterschiedlich sein.

Jede der Parallelschaltungen 121A1, 121B1, 121C1, 121D1 hat somit jeweils binär gewichtete schaltbare Widerstandselemente, die für den jeweils geltenden Schritt S1 bis SX (Fig. 11) gemäß dem Schrittsignal S<1:X> von Fig. 10 passend geschaltet werden. Bei dem Beispiel von Fig. 12 ist die Widerstandszelle 121A1_1 mit 4 Bit schaltbar.

Fig. 12 zeigt die Ausgestaltung der Widerstandszelle 121A1_1 der Parallelschaltung 121A1 für das Beispiel, dass 16 Widerstandsfinger oder Widerstandselemente in vier Widerstandsblöcken 161, 162, 163, 164 verschaltet sind, die Schalter S_A1 bis S16 und Widerstände R_A1 bis R_A16 haben. Es gilt also N = 16. Die Parallelschaltungen 121B1, 121C1, 121D1 sind bei diesem Beispiel auf dieselbe Weise ausgestaltet und sind daher nicht separat beschrieben.

Die Widerstände R_A1 bis R_A16 haben beispielsweise alle denselben Widerstandswert. Nachfolgend ist als Beispiel der Widerstandswert 8 kOhm für jeden der Widerstände R_A1 bis R_A16 angenommen. Die Schalter S_A1 bis S16 können insbesondere CMOS-Transistoren sein, insbesondere PMOS-Transistoren. Dasselbe gilt für die Schalter S_A1 bis S16 der Parallelschaltung 121C1. Die Schalter S_A1 bis S16 der Parallelschaltungen 121B1, 121D1 können insbesondere CMOS-Transistoren sein, insbesondere NMOS-Transistoren.

Der erste Widerstandsblock 161 hat einen Widerstand in einer Serienschaltung, die aus dem ersten Schalter S_A1 und dem ersten Widerstand R_A1 gebildet ist. Ist der erste Schalter S_A1 leitend geschaltet, wirkt der Widerstandsblock 161 in der Widerstandszelle 121A1_1 bei dem genannten Beispiel mit einem Gesamtwiderstandswert von 8 kOhm.

Der zweite Widerstandsblock 162 hat zwei Widerstände R_A2, R_A3 in zwei zueinander parallel geschalteten Serienschaltungen. Somit hat der Block 162 eine Serienschaltung aus einem zweiten Schalter S_A2 und einem zweiten Widerstand R_A2 und eine Serienschaltung aus einem dritten Schalter S_A3 und einem dritten Widerstand R_A3. Sind der zweite und dritte Schalter S_A2, S_A3 leitend geschaltet, wirkt der Widerstandsblock 162 in der Widerstandszelle 121A1_1 mit einem Gesamtwiderstandswert von 4 kOhm.

Der dritte Widerstandsblock 163 hat vier Widerstände R_A4 bis R_A7 in vier zueinander parallel geschalteten Serienschaltungen. Somit hat der Block 163 eine Serienschaltung aus einem vierten Schalter S_A4 und einem vierten Widerstand R_A4 bis zu einer Serienschaltung aus einem siebten Schalter S_A7 und einem siebten Widerstand R_A7. Sind der vierte bis siebte Schalter S_A4 bis S_A7 leitend geschaltet, wirkt der Widerstandsblock 163 in der Widerstandszelle 121A1_1 mit einem Gesamtwiderstandswert von 2 kOhm.

Der vierte Widerstandsblock 164 hat acht Widerstände R_A8 bis R_A16 in acht zueinander parallel geschalteten Serienschaltungen. Somit hat der Block 164 eine Serienschaltung aus einem achten Schalter S_A8 und einem achten Widerstand R_A8 bis zu einer Serienschaltung aus einem sechzehnten Schalter S_A16 und einem sechzehnten Widerstand R_A16. Sind der achte bis sechzehnte Schalter S_A8 bis S_A16 leitend geschaltet, wirkt der Widerstandsblock 164 in der Widerstandszelle 121A1_1 mit einem Gesamtwiderstandswert von 1 kOhm.

Der Übersichtlichkeit halber sind in Fig. 12 nicht alle Widerstände der Widerstände R_A1 bis R_A16 und Schalter der Schalter S_A1 bis S16 mit einem Bezugszeichen versehen.

Die Steuereinheit 153A hat vier D-Flip-Flops 3A1, 3A2, 3A3, 3A4. An den Eingang D jedes der Flip-Flops 3A1, 3A2, 3A3, 3A4 ist jeweils eines der Bits N_A_1<0:3> einer binär ausgedrückten Zahl geschaltet. Für das erste D-Flip-Flop 3A1 in Fig. 12 ist das jeweilige eine Bit der binär ausgedrückten Zahl N_A_1<0:3> als A_1_0 bezeichnet. Für das zweite D-Flip-Flop 3A2 in Fig. 12 ist das jeweilige eine Bit der binär ausgedrückten Zahl N_A_1<0:3> als A_1_1 bezeichnet. Für das dritte D-Flip-Flop 3A3 in Fig. 12 ist das jeweilige eine Bit der binär ausgedrückten Zahl N_A_1<0:3> als A_1_2 bezeichnet. Für das vierte D-Flip-Flop 3A4 in Fig. 12 ist das jeweilige eine Bit der binär ausgedrückten Zahl N_A_1<0:3> als A_1_3 bezeichnet.

Die binär ausgedrückte Zahl wurde von der Signalerzeugungseinheit 1512 in Fig. 10 per Auswahlsignal S_SL aus dem Speicherblock 154 ausgesucht. Die Bits N_A_1<0:3> der binär ausgedrückten Zahl, also die Signale A_1_0, A_1_1, A_1_2, A_1_3 kontrollieren, welche der Schalter der vier Widerstandsarrays 161 bis 164 nach dem Durchlaufen des Schrittes, also hier des Schrittes S1, leitfähig sein sollen. Hierfür wirkt ein Ausgang *Q̅* des ersten D-Flip-Flops 3A1 auf den Schalter S_A1 des ersten Widerstandsblocks 161. Ein Ausgang *Q̅* des zweiten D-Flip-Flops 3A2 wirkt auf die Schalter S_A2, S_A3 des zweiten Widerstandsblocks 162. Ein Ausgang *Q̅* des dritten D-Flip-Flops 3A3 wirkt auf die Schalter S_A4 bis S_A7 des dritten Widerstandsblocks 163. Ein Ausgang *Q̅* des vierten D-Flip-Flops 3A4 wirkt auf die Schalter S_A8 bis S_A16 des vierten Widerstandsblocks 164.

An dem Eingang C jedes der vier D-Flip-Flops 3A1, 3A2, 3A3, 3A4 liegt ein Schrittsignal bzw. Signal für den Schritt S1 als Beispiel an.

Sobald nun eine steigende Flanke in dem Signal für Schritt S1 an dem Eingang C eines der D-Flip-Flops 3A1, 3A2, 3A3, 3A4 ankommt, wird der Wert des Signals an dem Eingang D an den invertierenden Ausgang *Q̅* übernommen, da die Schalter S_A1 bis S_A16 bei dem gezeigten Beispiel als PMOS-Transistoren ausgestaltet sind. Sind die Schalter S_A1 bis S_A16 jedoch als NMOS-Transistoren ausgestaltet, wie bei den Parallelschaltungen 121B1, 121D1, wird anstelle des Ausgangs *Q̅* der Ausgang Q für die Kontrolle der Schalter S_A1 bis S16 verwendet.

Dadurch kann mindestens einer der Widerstandsblöcke 161, 162, 163, 164 leitend geschaltet werden.

Dieselbe Steuerung wird, insbesondere zeitgleich, für die Widerstandsblöcke 161, 162, 163, 164 der Widerstandszellen der Parallelschaltungen 121B1, 121C1, 121D1 vorgenommen. Zudem wird eine solche Steuerung anschließend für den mindestens einen nächsten Schritt S_X für die Widerstandsblöcke 161, 162, 163, 164 der Widerstandszellen der Parallelschaltungen 121A1, 121B1, 121C1, 121D1 vorgenommen.

Wenn der gesamte Übergang abgeschlossen ist, kann je nach den durch das Steuerteil 15 angesteuerten und dann eingestellten Werten jede Widerstandszelle 121A1_1 der Parallelschaltung 121A1 einen von 16 äquivalenten Widerstandswerten zwischen unendlich, bei welchem alle Schalter S1 bis S16 offen sind, und einem Widerstandswert von etwa 533 Ohm haben, bei welchem alle Schalter S1 bis S16 geschlossen sind. Damit kann jedes Widerstandsarray bzw. jede Parallelschaltung 121A1 einen möglichen äquivalenten Widerstandswert zwischen unendlich, bei welchem alle Schalter S1 bis S16 offen sind, und einem Widerstandswert von etwa 18 Ohm haben, bei welchem alle Schalter S1 bis S16 geschlossen sind. Dasselbe gilt auch für die Parallelschaltungen 121B1, 121C1, 121D1 und deren Widerstandszellen 121A1.

Dies erlaubt einfache Anpassungen um sowohl Kalibrierungen für individuelle Teile durchzuführen als auch für die Entwicklung von Sendemodulen 121 für andere Standards als sie für ein CAN-Bussystem gelten. Insbesondere kann das Sendemodul 121 alle in CAN-XL und/oder 10Base-T1S erlaubten statischen Zustände inklusive ihrer Zwischenzustände darstellen bzw. erzeugen. Die Zwischenzustände können auch Übergangszustände genannt werden.

Durch die Bündelung der einzelnen Widerstandsfinger bzw. Widerstandselemente S_A1, R_A1 usw. in die Widerstandsblöcke 161, 162, 163, 164 mit der binären Kodierung gibt es mit dieser Lösung pro Array für 450 einzelne Widerstandsfinger nur noch 30*4=120 Kontrollleitungen von dem Logikblock 153 zu H-Brücke des Sendemoduls 121. Dabei garantiert das Sendemodul 121, dass nicht mehr Widerstandsfinger bzw. Widerstandselemente S_A1, R_A1 usw. als nötig auf einmal schalten.

Dadurch können große Schaltspitzen vermieden werden, die entstehen, wenn beispielsweise die 450 Widerstandsfinger bzw. Widerstandselemente S_A1, R_A1 usw. eines Sendemoduls 121 direkt binär mit 9 Leitungen angesteuert würden, wie beispielsweise bei einem Übergang von 255 auf 256 (binär: 011111111 auf 100000000). Bei einem solchen Übergang von 255 auf 256 (binär: 011111111 auf 100000000) würden leitfähige Finger jede einzelne Leitung schalten.

Ein weiterer Vorteil liegt darin, dass auch bei unvorhergesehenen unvollständigen Übergängen keine abrupten Änderungen am Ausgang des Sendemoduls 121 möglich sind. Grund dafür ist, dass auch nach dem Zurücksetzen der Kette die Änderungen wieder nur Schritt für Schritt passieren oder ablaufen. Dies sorgt für eine kontinuierliche Ausgabe (Output) und ist somit gut für das Emissionsverhalten des Sendemoduls 121 und der zugehörigen Sende-Empfangseinrichtung 12.

Die in Fig. 12 gezeigte schaltungstechnische Implementierung des Logikblocks 153, der eine Logikfunktion N(X, Übergang) ansteuert, wobei N = (N_A, N_B, N_C, N_D) der Vektor der aktiven Widerstandsfinger ist, die zum Schritt S_X eines gewählten Übergangs aktiv sein solle, ist nur eine Möglichkeit für die Implementierung des Logikblocks 153.

Generell sind für alle Übergänge auf dem Bus 40 Logikfunktionen N(X, Übergang) implementierbar. Die Implementierungen der unterschiedlichen Übergänge können unterschiedlich sein.

Zudem gilt, dass zwar die in Fig. 12 gezeigte schaltungstechnische Implementierung des Logikblocks 153 schaltungstechnisch unaufwändig und robust ist, jedoch beispielsweise nur begrenzt große Schritte bzw. Zwischenzustände für den Übergang ermöglicht.

Der Logikblock 153 und oder die Ansteuerung der Schalter für die Widerstände der Sendestufen 121A, 121B, 121C, 121D kann daher eine andere Ausgestaltung der Schritte bzw. Zwischenzustände ermöglichen als in Fig. 11 gezeigt oder in den Tabellen 2 und 3 zuvor beschrieben. Insbesondere können/kann der Logikblock 153 und oder die Ansteuerung der Schalter für die Widerstände der Sendestufen 121A, 121B, 121C, 121D die Größe der Schritte und/oder die zeitliche Dauer der Zwischenzustände flexibler ausgestalten.

Alle zuvor beschriebenen Ausgestaltungen des Sendemoduls 121, der Sende-/Empfangseinrichtung 12, der Teilnehmerstationen 10, 20, 30, des Bussystems 1 und des darin ausgeführten Verfahrens gemäß dem Ausführungsbeispiel und dessen Modifikationen können einzeln oder in allen möglichen Kombinationen Verwendung finden. Zusätzlich sind insbesondere folgende Modifikationen denkbar.

Das zuvor beschriebene Bussystem 1 ist anhand eines auf dem CAN-Protokoll basierenden Bussystems beschrieben. Das Bussystem 1 gemäß dem Ausführungsbeispiel kann jedoch alternativ eine andere Art von Kommunikationsnetz sein, bei dem die Signale als differentielle Signale übertragen werden.

Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf den Bus 40 gewährleistet ist.

Das Bussystem 1 gemäß dem Ausführungsbeispiel und dessen Modifikationen ist insbesondere ein Bussystem, bei dem zwischen mindestens zwei der Teilnehmerstationen 10, 20, 30 gemäß zwei verschiedenen CAN-Standards kommuniziert werden kann, wie beispielsweise CAN-HS oder CAN FD oder CAN SIC oder CAN XL. Somit ist die Funktionalität des zuvor beschriebenen Ausführungsbeispiels beispielsweise bei Sende-/Empfangseinrichtungen 12, 22 einsetzbar, die in einem derartigen Bussystem zu betreiben sind.

Die Anzahl und Anordnung der Teilnehmerstationen 10, 20, 30 in dem Bussystem 1 gemäß dem Ausführungsbeispiel und dessen Modifikationen ist beliebig wählbar.

## Patentansprüche

1. Sendemodul (121) für eine Sende-Empfangseinrichtung (12) einer Teilnehmerstation (10; 30) eines seriellen Bussystems (1), bei dem das Sendemodul (121) zum Senden eines digitalen Sendesignals (TxD) als analoges differentielles Signal (CAN_H, CAN_L) auf einen Bus (40) des Bussystems (1) ausgestaltet ist, um an mindestens eine andere Teilnehmerstation (10; 20; 30) des Bussystems (1) eine Nachricht (45) zu senden, wobei das Sendemodul (121) **gekennzeichnet ist durch**
Sendestufen (121A; 121B; 121C; 121D) mit Parallelschaltungen (121A1; 121VB1; 121C1; 121D1) aus schaltbaren Widerständen (R_A1 ...R_AN; R_B1 ...R_BN; R_C1 ...R_CN; R_D1 ...R_DN), und
ein Steuerteil (15) zur schrittweisen Steuerung des Schaltens der schaltbaren Widerstände (R_A1 ...R_AN; R_B1 ... R_BN; R_C1 ...R_CN; R_D1 ... R_DN),
wobei mindestens zwei der schaltbaren Widerstände (R_A2, R_A3; RA4 ... R_A7; R_A8 ...R_A16) in einem Widerstandsblock (162; 163; 164) gemeinsam schaltbar angeordnet sind,
wobei mindestens zwei Widerstandsblöcke (161; 162; 163; 164) vorgesehen sind, die mindestens einen der schaltbaren Widerstände (R_A2, R_A3; RA4 ... R_A7; R_A8 ...R_A16) aufweisen, und
wobei das Steuerteil (15) ausgestaltet ist, die von dem digitalen Sendesignal (TxD) über der Zeit (t) vorgegebenen Buszustände (401; 402; 403; LV0; LV1) auf dem Bus (40) durch schrittweises Ändern über der Zeit (t) der Zahl der aktiv geschalteten Widerstandsblöcke (162; 163; 164) zu erzeugen.

2. Sendemodul (121) nach Anspruch 1, wobei alle schaltbaren Widerstände (R_A1 ...R_AN; R_B1 ...R_BN; R_C1 ...R_CN; R_D1 ...R_DN) in etwa denselben Widerstandswert haben.

3. Sendemodul (121) nach Anspruch 1 oder 2, wobei der Widerstandswert eines ersten Widerstandsblocks (161; 162; 163; 164) der mindestens zwei Widerstandsblöcke (161; 162; 163; 164) in etwa halb so groß ist wie der Widerstandswert eines zweiten Widerstandsblocks (161; 162; 163; 164) der mindestens zwei Widerstandsblöcke (161; 162; 163; 164).

4. Sendemodul (121) nach einem der vorangehenden Ansprüche, zudem mit einem Zustandsbearbeitungsblock (151) zum Auswerten des digitalen Sendesignals (TxD), um zu entscheiden, wie die schaltbaren Widerstände (R_A1 ...R_AN; R_B1 ...R_BN; R_C1 ...R_CN; R_D1 ...R_DN) der Parallelschaltungen (121A1; 121B1; 121C1; 121D1) schrittweise zu schalten sind, um den angestrebten Zustand (401; 402; 403; LV0; LV1) auf dem Bus (40) einzustellen.

5. Sendemodul (121) nach Anspruch 4,
wobei der Zustandsbearbeitungsblock (151) ausgestaltet ist zum Erzeugen eines Anstiegsratesignals (S_SW), und
wobei der Zustandsbearbeitungsblock (151) ausgestaltet ist, das Anstiegsratesignal (S_SW) auf der Grundlage eines Auswerteergebnisses des digitalen Sendesignals (TxD) zu erzeugen.

6. Sendemodul (121) nach Anspruch 5,
wobei der Zustandsbearbeitungsblock (151) ausgestaltet ist zum Erzeugen eines Schrittstartsignals (S_ST), und
wobei der Zustandsbearbeitungsblock (151) ausgestaltet ist, das Anstiegsratesignal (S_SW) nach Freigabe durch das Schrittstartsignal (S_ST) zur Ansteuerung der schaltbaren Widerstände (R_A1 ...R_AN; R_B1 ... R_BN; R_C1 ... R_CN; R_D1 ... R_DN) auszugeben.

7. Sendemodul (121) nach einem der vorangehenden Ansprüche, zudem mit einem Schrittgenerator (152) zum Erzeugen eines Schrittsignals (S_ST) auf der Grundlage eines Anstiegsratesignals (S_SW) und zur Ausgabe des Schrittsignals (S_ST) an einen Logikblock (153) zur Ansteuerung von Schaltern (S_A1 bis S_AN; S_B1 ...S_BN; S_C1 ...S_CN; S_D1 ...S_DN) der Parallelschaltung 121A1; 121B1; 121C1; 121D1) zum Schalten der schaltbaren Widerstände (R_A1 ... R_AN; R_B1 ... R_BN; R_C1 ... R_CN; R_D1 ... R_DN).

8. Sendemodul (121) nach Anspruch 7, wobei der Zustandsbearbeitungsblock (151) ausgestaltet ist zum Erzeugen eines Rücksetzsignals (S_RS) zum Zurücksetzen des Schrittgenerators (152) auf einen Ausgangswert.

9. Sendemodul (121) nach einem der vorangehenden Ansprüche, zudem mit einem Logikblock (153) zum Erzeugen eines Steuersignals (N_A_1; N_B_1; N_C_1; N_D_1) zur Ansteuerung der mindestens zwei Widerstandsblöcke (161; 162; 163; 164) einer Sendestufe (121A, 121B, 121C, 121D).

10. Sendemodul (121) nach Anspruch 9,
wobei der Logikblock (153) mindestens zwei Flipflops (3A1; 3A2; 3A3; 3A4) aufweist, die zum Erzeugen eines Ansteuersignals (A_1_1; A1_2; A1_3; A1_4) für jeweils einen der mindestens zwei Widerstandsblöcke (161; 162; 163; 164) angeordnet sind, und
wobei der Logikblock (153) ausgestaltet ist, das Steuersignal (N_A_1; N_B_1; N_C_1; N_D_1) als eine binäre Zahl mit Bits zu erzeugen, deren Anzahl gleich der Anzahl der mindestens zwei Flipflops (3A1; 3A2; 3A3; 3A4) ist und die Bits an die mindestens zwei Flipflops (3A1; 3A2; 3A3; 3A4) auszugeben.

11. Sendemodul (121) nach Anspruch 9 oder 10,
zudem mit einem Speicherblock (154), in dem Sollwerte (154P) für die Widerstandswerte der Parallelschaltungen (121A1, 121B1, 121C1, 121D1) gespeichert sind, die für Übergänge zwischen Signalzuständen (401; 402; 403; LV0; LV1) auf dem Bus (40) für jeden Zwischenzustand (S1 ... SX) im Übergang zu erzeugen sind,
wobei der Zustandsbearbeitungsblock (151) ausgestaltet ist zum Erzeugen, auf der Grundlage der Auswertung des digitalen Sendesignals (TxD), eines Auswahlsignals (S_SL) und zur Ausgabe des Auswahlsignals (S_SL) an den Logikblock (153), und
wobei der Logikblock (153) ausgestaltet ist, zum Erzeugen des Steuersignals (N_A_1; N_B_1; N_C_1; N_D_1) zur Ansteuerung der mindestens zwei Widerstandsblöcke (161; 162; 163; 164) einer Sendestufe (121A, 121B, 121C, 121D) auf der Grundlage der von dem Auswahlsignal (S_SL) ausgewählten Übergänge.

12. Sendemodul (121) nach einem der Ansprüche 9 bis 11,
wobei das Sendemodul (121) zum Erzeugen jedes Zwischenzustands (S1, ..., SX) auf dem Bus (40) eine Widerstandszelle (121A1_1) aufweist, in welcher Widerstandsblöcke (161, 162; 163; 164) angeordnet sind,
wobei der Logikblock (153) zum Ansteuern jedes Zwischenzustands (S1, ..., SX) auf dem Bus (40) eine Steuerzelle (153A_1) aufweist, die zum Steuern einer der Widerstandszellen (121A1_1) ausgestaltet ist, und
wobei alle Steuerzellen (153A_1) für jeden Zwischenzustand (S1, ..., SX) identisch aufgebaut sind.

13. Sendemodul (121) nach einem der vorangehenden Ansprüche, wobei eine erste bis vierte Sendestufe (121A, 121B, 121C, 121D) in eine Vollbrücke geschaltet sind, bei der die erste und vierte Sendestufe (121A, 121D) in Reihe geschaltet sind und die dritte und zweite Sendestufe (121C, 121B) in Reihe geschaltet sind.

14. Sendemodul (121) nach Anspruch 13,
wobei die erste bis vierte Sendestufe (121A, 121B, 121C, 121D) zum Erzeugen von differentiellen Bussignalen (CAN_L, CAN_H) für einen Bus (40) des Bussystems (1) als Reaktion auf die beiden unterschiedlichen Werte des digitalen Sendesignals (TxD) derart ausgestaltet sind, dass das Sendemodul (121; 121_0) in seiner ersten Betriebsart (SLOW; SIC) einen ersten oder zweiten Buszustand (401, 402) auf dem Bus (40) erzeugt und in seiner zweiten Betriebsart (FAST_TX) einen dritten oder vierten Buszustand (LV0, LV1) erzeugt, und
wobei die Bussignale (CAN_L, CAN_H) auf dem Bus (40) eine Differenzspannung (VDIFF) bilden, deren Spannungswert für den ersten bis vierten Buszustand (401, 402, LV0, LV1) unterschiedlich ist.

15. Sende-/Empfangseinrichtung (12), mit
einem Sendemodul (121) nach einem der vorangehenden Ansprüche, und
einem Empfangsmodul (122) zum Empfangen von Signalen (CAN_H, CAN_L) von dem Bus (40) und zum Erzeugen eines digitalen Empfangssignals (RxD) aus dem analogen differentiellen Signal (CAN_H, CAN_L).

16. Sende-/Empfangseinrichtung (12) nach Anspruch 15, wobei das Sendemodul (121) ausgestaltet ist, die analogen differentiellen Signale (CAN_H, CAN_L) in einer ersten Kommunikationsphase (451) der Nachricht (45) mit einem anderen Physical Layer (451_P) zu erzeugen als in einer zweiten Kommunikationsphase (452).

17. Teilnehmerstation (20) für ein serielles Bussystem (1), mit
einer Sende-/Empfangseinrichtung (12) nach Anspruch 15 oder 16, und
einer Kommunikationssteuereinrichtung (11) zum Steuern der Kommunikation in dem Bussystem (1) und zur Erzeugung des ersten Sendesignals (TXD),
wobei die Teilnehmerstation (20) für die Kommunikation in einem Bussystem (1) ausgestaltet ist, in dem zumindest zeitweise ein exklusiver, kollisionsfreier Zugriff einer Teilnehmerstation (10, 20, 30) auf den Bus (40) des Bussystems (1) gewährleistet ist.

18. Verfahren zum Senden einer Nachricht (45) mit differentiellen Signalen (CAN_H, CAN_L) in einem seriellen Bussystem (1), wobei das Verfahren mit einem Sendemodul (121) ausgeführt wird, wobei das Sendemodul (121) **gekennzeichnet ist durch** Sendestufen (121A; 121B; 121C; 121D) mit Parallelschaltungen (121A1; 121VB1; 121C1; 121D1) aus schaltbaren Widerständen (R_A1 ... R_AN; R_B1 ...R_BN; R_C1 ... R_CN; R_D1 ...R_DN) und zum Senden eines digitalen Sendesignals (TxD_INT) als analoges differentielles Signal (CAN_H, CAN_L) auf einen Bus (40) des Bussystems (1) ausgestaltet ist, um an mindestens eine andere Teilnehmerstation (10; 20; 30) des Bussystems (1) eine Nachricht (45) zu senden, wobei das Verfahren den Schritt aufweist
schrittweises Steuerung des Schaltens von schaltbaren Widerständen (R_A1 ... R_AN; R_B1 ... R_BN; R_C1 ... R_CN; R_D1 ...R_DN) mit einem Steuerteil (15) des Sendemoduls (121),
wobei mindestens zwei der schaltbaren Widerstände (R_A2, R_A3; RA4 ... R_A7; R_A8 ... R_A16) in einem Widerstandsblock (162; 163; 164) gemeinsam schaltbar angeordnet sind,
wobei mindestens zwei Widerstandsblöcke (161; 162; 163; 164) vorgesehen sind, die mindestens einen der schaltbaren Widerstände (R_A2, R_A3; RA4 ... R_A7; R_A8 ... R_A16) aufweisen, und
wobei das Steuerteil (15) die von dem digitalen Sendesignal (TxD) über der Zeit (t) vorgegebenen Buszustände (401; 402; 403; LV0; LV1) auf dem Bus (40) durch schrittweises Ändern über der Zeit (t) der Zahl der aktiv geschalteten Widerstandsblöcke (162; 163; 164) erzeugt.

## Claims

1. Transmission module (121) for a transceiver device (12) of a subscriber station (10; 30) of a serial bus system (1), in which the transmission module (121) is configured to transmit a digital transmission signal (TxD) as an analogue differential signal (CAN_H, CAN_L) to a bus (40) of the bus system (1) in order to transmit a message (45) to at least one other subscriber station (10; 20; 30) of the bus system (1), wherein the transmission module (121) is **characterized by**
transmission stages (121A; 121B; 121C; 121D) with parallel circuits (121A1; 121VB1; 121C1; 121D1) of switchable resistors (R_A1 ...R_AN; R_B1 ... R_BN; R_C1 ... R_CN; R_D1 ... R_DN), and
a control part (15) for the gradual control of the switching of the switchable resistors (R_A1 ... R_AN; R_B1 ... R_BN; R_C1 ... R_CN; R_D1 ... R_DN), wherein at least two of the switchable resistors (R_A2, R_A3; RA4 ...R_A7; R_A8 ... R_A16) are arranged in a resistor block (162; 163; 164) so that they can be switched together,
wherein at least two resistor blocks (161; 162; 163; 164) which have at least one of the switchable resistors (R_A2, R_A3; RA4 ... R_A7; R_A8 ...R_A16) are provided, and
wherein the control part (15) is designed to generate the bus states (401; 402; 403; LV0; LV1) specified by the digital transmission signal (TxD) over time (t) on the bus (40) by gradually changing the number of active resistor blocks (162; 163; 164) over time (t).

2. Transmission module (121) according to Claim 1, wherein all switchable resistors (R_A1 ... R_AN; R_B1 ... R_BN; R_C1 ... R_CN; R_D1 ... R_DN) have approximately the same resistance value.

3. Transmission module (121) according to Claim 1 or 2, wherein the resistance value of a first resistor block (161; 162; 163; 164) of the at least two resistor blocks (161; 162; 163; 164) is approximately half as large as the resistance value of a second resistor block (161; 162; 163; 164) of the at least two resistor blocks (161; 162; 163; 164).

4. Transmission module (121) according to any one of the preceding claims, additionally having a state processing block (151) for evaluating the digital transmission signal (TxD) in order to decide how the switchable resistors (R_A1 ...R_AN; R_B1 ...R_BN; R_C1 ...R_CN; R_D1 ...R_DN) of the parallel circuits (121A1; 121 B1; 121 C1; 121 D1) are to be gradually switched so as to set the desired state (401; 402; 403; LV0; LV1) on the bus (40).

5. Transmission module (121) according to Claim 4,
wherein the state processing block (151) is designed to generate a rise rate signal (S_SW), and
wherein the state processing block (151) is designed to generate the rise rate signal (S_SW) on the basis of an evaluation result of the digital transmission signal (TxD).

6. Transmission module (121) according to Claim 5,
wherein the state processing block (151) is designed to generate a step start signal (S_ST), and
wherein the state processing block (151) is designed to output the rise rate signal (S_SW) after being enabled by the step start signal (S_ST) to actuate the switchable resistors (R_A1 ... R_AN; R_B1 ... R_BN; R_C1 ...R_CN; R_D1 ... R_DN).

7. Transmission module (121) according to any one of the preceding claims, additionally having a step generator (152) for generating a step signal (S_ST) on the basis of a rise rate signal (S_SW) and for outputting the step signal (S_ST) to a logic block (153) for actuating switches (S_A1 to S_AN; S_B1 ...S_BN; S_C1 ...S_CN; S_D1 ...S_DN) of the parallel circuit 121A1; 121 B1; 121C1; 121D1) for switching the switchable resistors (R_A1 ...R_AN; R_B1 ... R_BN; R_C1 ... R_CN; R_D1 ... R_DN).

8. Transmission module (121) according to Claim 7, wherein the state processing block (151) is designed to generate a reset signal (S_RS) for resetting the step generator (152) to an output value.

9. Transmission module (121) according to any one of the preceding claims, additionally having a logic block (153) for generating a control signal (N_A_1; N_B_1; N_C_1; N_D_1) for actuating the at least two resistor blocks (161; 162; 163; 164) of a transmission stage (121A, 121B, 121C, 121D).

10. Transmission module (121) according to Claim 9,
wherein the logic block (153) has at least two flip-flops (3A1; 3A2; 3A3; 3A4) which are arranged so as to generate an actuation signal (A_1_1; A1_2; A1_3; A1 _4) for each of the at least two resistor blocks (161; 162; 163; 164), and
the logic block (153) is designed to generate the control signal (N_A_1; N_B_1; N_C_1; N_D_1) as a binary number with bits, the number of which is equal to the number of the at least two flip-flops (3A1; 3A2; 3A3; 3A4), and to output the bits to the at least two flip-flops (3A1; 3A2; 3A3; 3A4).

11. Transmission module (121) according to Claim 9 or 10,
additionally having a memory block (154), in which setpoint values (154P) for the resistance values of the parallel circuits (121A1, 121 B1, 121C1, 121 D1) are stored, said setpoint values being intended to be generated for transitions between signal states (401; 402; 403; LV0; LV1) on the bus (40) for each intermediate state (S1 ... SX) in the transition,
wherein the state processing block (151) is designed to generate a selection signal (S_SL) based on an evaluation of the digital transmission signal (TxD) and to output the selection signal (S_SL) to the logic block (153), and
wherein the logic block (153) is designed to generate the control signal (N_A_1; N_B_1; N_C_1; N_D_1) for actuating the at least two resistor blocks (161; 162; 163; 164) of a transmission stage (121A, 121B, 121C, 121D) based on transitions selected by the selection signal (S_SL).

12. Transmission module (121) according to one of Claims 9 to 11,
wherein the transmission module (121) has a resistance cell (121A1_1), in which resistor blocks (161, 162; 163; 164) are arranged, for generating each intermediate state (S1, ..., SX) on the bus (40),
wherein the logic block (153) has a control cell (153A_1), which is designed to control one of the resistance cells (121A1_1), for actuating each intermediate state (S1, ..., SX) on the bus (40), and
wherein all control cells (153A_1) are of identical design for each intermediate state (S1, ..., SX).

13. Transmission module (121) according to any one of the preceding claims, wherein a first to fourth transmission stage (121A, 121B, 121C, 121D) are connected in a full-bridge, in which the first and fourth transmission stage (121A, 121D) are connected in series and the third and second transmission stage (121C, 121B) are connected in series.

14. Transmission module (121) according to Claim 13,
wherein the first to the fourth transmission stages (121A, 121B, 121C, 121D) are designed to generate differential bus signals (CAN_L, CAN_H) for a bus (40) of the bus system (1) in response to the two different values of the digital transmission signal (TxD) such that the transmission module (121; 121_0) generates, in its first operating mode (SLOW; SIC), a first or second bus state (401, 402) on the bus (40) and generates, in its second operating mode (FAST_TX), a third or fourth bus state (LV0, LV1), and
wherein the bus signals (CAN_L, CAN_H) on the bus (40) form a differential voltage (VDIFF), the voltage value of which is different for the first to fourth bus states (401, 402, LV0, LV1).

15. Transceiver device (12), having
a transmission module (121) according to any one of the preceding claims, and
a reception module (122) for receiving signals (CAN_H, CAN_L) from the bus (40) and for generating a digital reception signal (RxD) from the analogue differential signal (CAN_H, CAN_L).

16. Transceiver device (12) according to Claim 15, wherein the transmission module (121) is designed to generate the analogue differential signals (CAN_H, CAN_L) in a first communication phase (451) of the message (45) with a different physical layer (451_P) than in a second communication phase (452).

17. Subscriber station (20) for a serial bus system (1), having
a transceiver device (12) according to Claim 15 or 16, and
a communication control device (11) for controlling the communication in the bus system (1) and for generating the first transmission signal (TXD),
wherein the subscriber station (20) is designed for communication in a bus system (1), in which exclusive, collision-free access of a subscriber station (10, 20, 30) to the bus (40) of the bus system (1) is at least temporarily guaranteed.

18. Method for transmitting a message (45) with differential signals (CAN_H, CAN_L) in a serial bus system (1), wherein the method is carried out using a transmission module (121), wherein the transmission module (121) is **characterized by** transmission stages (121A; 121B; 121C; 121D) with parallel circuits (121A1; 121VB1; 121 C1; 121D1) of switchable resistors (R_A1 ... R_AN; R_B1 ... R_BN; R_C1 ... R_CN; R_D1 ... R_DN) and is designed to transmit a digital transmission signal (TxD_INT) as an analogue differential signal (CAN_H, CAN_L) to a bus (40) of the bus system (1) in order to transmit a message (45) to at least one other subscriber station (10; 20; 30) of the bus system (1), wherein the method comprises the step
gradual control of the switching of switchable resistors (R_A1 ... R_AN; R_B1 ...R_BN; R_C1 ...R_CN; R_D1 ... R_DN) using a control part (15) of the transmission module (121),
wherein at least two of the switchable resistors (R_A2, R_A3; RA4 ...R_A7; R_A8 ... R_A16) are arranged in a resistor block (162; 163; 164) so that they can be switched together,
wherein at least two resistor blocks (161; 162; 163; 164) which have at least one of the switchable resistors (R_A2, R_A3; RA4 ... R_A7; R_A8 ...R_A16) are provided, and
wherein the control part (15) generates the bus states (401; 402; 403; LV0; LV1) specified by the digital transmission signal (TxD) over time (t) on the bus (40) by gradually changing the number of active resistor blocks (162; 163; 164) over time (t).

## Revendications

1. Module d'émission (121) pour un dispositif d'émission/réception (12) d'une station d'abonné (10 ; 30) d'un système de bus série (1), dans lequel le module d'émission (121) est conçu pour émettre un signal d'émission numérique (TxD) en tant que signal différentiel analogique (CAN_H, CAN_L) vers un bus (40) du système de bus (1), afin d'émettre un message (45) vers au moins une autre station d'abonné (10 ; 20 ; 30) du système de bus (1), dans lequel le module d'émission (121) est **caractérisé par**
des étages d'émission (121A ; 121B ; 121C ; 121D) comprenant des circuits parallèles (121A1 ; 121VB1 ; 121 C1 ; 121 D1) constitués de résistances commutables (R_A1 ... R_AN ; R_B1 ... R_BN ; R_C1 ... R_CN ; R_D1 ... R_DN), et
une partie de commande (15) pour commander progressivement la commutation des résistances commutables (R_A1 ... R_AN ; R_B1 ... R_BN ; R_C1 ... R_CN ; R_D1 ... R_DN),
dans lequel au moins deux des résistances commutables (R_A2, R_A3 ; RA4 ...R_A7 ; R_A8...R_A16) sont disposées dans un bloc de résistances (162 ; 163 ; 164) de manière à pouvoir être commutées ensemble,
dans lequel il est prévu au moins deux blocs de résistances (161 ; 162 ; 163 ; 164) qui comportent au moins l'une des résistances commutables (R_A2, R_A3 ; RA4 ...R_A7 ; R_A8...R_A16), et
dans lequel la partie de commande (15) est conçue pour générer les états de bus (401 ; 402 ; 403 ; LV0 ; LV1) prédéfinis par le signal d'émission numérique (TxD) au cours du temps (t) sur le bus (40) par modification progressive du nombre de blocs de résistances (162 ; 163 ; 164) commutés actifs au cours du temps (t).

2. Module d'émission (121) selon la revendication 1, dans lequel toutes les résistances commutables (R_A1 ... R_AN ; R_B1 ... R_BN ; R_C1 ... R_CN ; R_D1 ... R_DN) ont approximativement la même valeur de résistance.

3. Module d'émission (121) selon la revendication 1 ou 2, dans lequel la valeur de résistance d'un premier bloc de résistances (161 ; 162 ; 163 ; 164) des au moins deux blocs de résistances (161 ; 162 ; 163 ; 164) est approximativement égale à la moitié de la valeur de résistance d'un deuxième bloc de résistances (161 ; 162 ; 163 ; 164) des au moins deux blocs de résistances (161 ; 162 ; 163 ; 164).

4. Module d'émission (121) selon l'une quelconque des revendications précédentes, comprenant en outre un bloc de traitement d'état (151) pour évaluer le signal d'émission numérique (TxD) afin de décider comment les résistances commutables (R_A1 ... R_AN ; R_B1 ... R_BN ; R_C1 ... R_CN ; R_D1 ... R_DN) des circuits parallèles (121A1 ; 121 B1 ; 121 C1 ; 121 D1) doivent être commutées progressivement afin d'établir l'état souhaité (401 ; 402 ; 403 ; LV0 ; LV1) sur le bus (40).

5. Module d'émission (121) selon la revendication 4,
dans lequel le bloc de traitement d'état (151) est conçu pour générer un signal de vitesse de montée (S_SW), et
dans lequel le bloc de traitement d'état (151) est conçu pour générer le signal de vitesse de montée (S_SW) sur la base d'un résultat d'évaluation du signal d'émission numérique (TxD).

6. Module d'émission (121) selon la revendication 5,
dans lequel le bloc de traitement d'état (151) est conçu pour générer un signal de début de pas (S_ST), et
dans lequel le bloc de traitement d'état (151) est conçu pour délivrer le signal de vitesse de montée (S_SW), après validation par le signal de début de pas (S_ST), afin d'activer les résistances commutables (R_A1...R_AN ; R_B1...R_BN ; R_C1...R_CN ; R_D1...R_DN).

7. Module d'émission (121) selon l'une quelconque des revendications précédentes, comprenant en outre un générateur de pas (152) destiné à générer un signal de pas (S_ST) sur la base d'un signal de vitesse de montée (S_SW) et pour délivrer le signal de pas (S_ST) à un bloc logique (153) destiné à activer des commutateurs (S_A1 à S_AN ; S_B1 ... S_BN ; S_C1 ... S_CN ; S_D1 ... S_DN) du circuit parallèle (121A1 ; 121 B1; 121C1 ; 121 D1) afin de commuter les résistances commutables (R_A1 ... R_AN ; R_B1 ... R_BN ; R_C1 ... R_CN ; R_D1 ... R_DN).

8. Module d'émission (121) selon la revendication 7, dans lequel le bloc de traitement d'état (151) est conçu pour générer un signal de réinitialisation (S_RS) destiné à réinitialiser le générateur de pas (152) à une valeur initiale.

9. Module d'émission (121) selon l'une quelconque des revendications précédentes, comprenant en outre un bloc logique (153) destiné à générer un signal de commande (N_A_1 ; N_B_1 ; N_C_1 ; N_D_1) afin d'activer les au moins deux blocs de résistances (161 ; 162 ; 163 ; 164) d'un étage d'émission (121A, 121B, 121C, 121D).

10. Module d'émission (121) selon la revendication 9,
dans lequel le bloc logique (153) comporte au moins deux bascules (3A1 ; 3A2 ; 3A3 ; 3A4) qui sont agencées de manière à générer un signal d'activation (A_1_1 ; A1_2 ; A1 _3 ; A1_4) destiné à chacun des au moins deux blocs de résistances (161 ; 162 ; 163 ; 164), et
dans lequel le bloc logique (153) est conçu pour générer le signal de commande (N_A_1 ; N_B_1 ; N_C_1 ; N_D_1) sous la forme d'un nombre binaire comprenant des bits dont le nombre est égal au nombre des au moins deux bascules (3A1 ; 3A2 ; 3A3 ; 3A4), et pour délivrer les bits aux au moins deux bascules (3A1 ; 3A2 ; 3A3 ; 3A4).

11. Module d'émission (121) selon la revendication 9 ou 10,
comprenant en outre un bloc de mémoire (154) dans lequel sont stockées des valeurs de consigne (154P) pour les valeurs de résistance des circuits parallèles (121A1, 121B1, 121C1, 121D1), lesdites valeurs de consigne devant être générées pour les transitions entre des états de signaux (401 ; 402 ; 403 ; LV0 ; LV1) sur le bus (40) pour chaque état intermédiaire (S1 ... SX) dans la transition,
dans lequel le bloc de traitement d'état (151) est conçu pour générer un signal de sélection (S_SL) sur la base de l'évaluation du signal d'émission numérique (TxD) et pour délivrer le signal de sélection (S_SL) au bloc logique (153), et
dans lequel le bloc logique (153) est conçu pour générer le signal de commande (N_A_1 ; N_B_1 ; N_C_1 ; N_D_1) afin d'activer les au moins deux blocs de résistances (161 ; 162 ; 163 ; 164) d'un étage d'émission (121A, 121B, 121C, 121D) sur la base des transitions sélectionnées par le signal de sélection (S_SL).

12. Module d'émission (121) selon l'une quelconque des revendications 9 à 11, dans lequel le module d'émission (121) comporte une cellule de résistance (121A1_1), dans laquelle sont disposés des blocs de résistances (161, 162 ; 163 ; 164), pour générer chaque état intermédiaire (S1, ..., SX) sur le bus (40),
dans lequel le bloc logique (153) comporte une cellule de commande (153A_1), qui est conçue pour activer l'une des cellules de résistance (121A1_1), afin d'activer chaque état intermédiaire (S1, ..., SX) sur le bus (40), et
dans lequel toutes les cellules de commande (153A_1) sont de conception identique pour chaque état intermédiaire (S1, ..., SX).

13. Module d'émission (121) selon l'une quelconque des revendications précédentes, dans lequel les premier à quatrième étages d'émission (121A, 121B, 121C, 121D) sont connectés en pont complet, les premier et quatrième étages d'émission (121A, 121D) étant connectés en série et les troisième et deuxième étages d'émission (121C, 121B) étant connectés en série.

14. Module d'émission (121) selon la revendication 13,
dans lequel les premier à quatrième étages d'émission (121A, 121B, 121C, 121D) sont conçus pour générer des signaux de bus différentiels (CAN_L, CAN_H) pour un bus (40) du système de bus (1) en réponse aux deux valeurs différentes du signal d'émission numérique (TxD), de telle sorte que le module d'émission (121 ; 121_0) génère, dans son premier mode de fonctionnement (SLOW ; SIC), un premier ou deuxième état de bus (401, 402) sur le bus (40) et, dans son deuxième mode de fonctionnement (FAST_TX), génère un troisième ou quatrième état de bus (LV0, LV1), et
dans lequel les signaux de bus (CAN_L, CAN_H) sur le bus (40) forment une tension différentielle (VDIFF), dont la valeur de tension est différente pour les premier à quatrième états de bus (401, 402, LV0, LV1).

15. Dispositif d'émission/réception (12), comprenant
un module d'émission (121) selon l'une quelconque des revendications précédentes, et
un module de réception (122) destiné à recevoir des signaux (CAN_H, CAN_L) du bus (40) et à générer un signal de réception numérique (RxD) à partir du signal différentiel analogique (CAN_H, CAN_L).

16. Dispositif d'émission/réception (12) selon la revendication 15, dans lequel le module d'émission (121) est conçu pour générer les signaux différentiels analogiques (CAN_H, CAN_L) dans une première phase de communication (451) du message (45) avec une couche physique (451_P) différente de celle d'une deuxième phase de communication (452).

17. Station d'abonné (20) pour un système de bus série (1), comprenant
un dispositif d'émission/réception (12) selon la revendication 15 ou 16, et un dispositif de commande de communication (11) pour commander la communication dans le système de bus (1) et pour générer le premier signal d'émission (TXD),
dans lequel la station d'abonné (20) est conçue pour la communication dans un système de bus (1) dans lequel un accès exclusif et sans collision d'une station d'abonné (10, 20, 30) au bus (40) du système de bus (1) est garanti au moins temporairement.

18. Procédé pour émettre un message (45) au moyen de signaux différentiels (CAN_H, CAN_L) dans un système de bus série (1), le procédé étant mis en œuvre au moyen d'un module d'émission (121), dans lequel le module d'émission (121) est **caractérisé par** des étages d'émission (121A ; 121B ;
121C ; 121D) comprenant des circuits parallèles (121A1 ; 121VB1 ; 121C1 ; 121D1) constitués de résistances commutables (R_A1 ... R_AN ; R_B1 ... R_BN; R_C1...R_CN ; R_D1...R_DN) et destinés à émettre un signal d'émission numérique (TxD_INT) en tant que signal différentiel analogique (CAN_H, CAN_L) vers un bus (40) du système de bus (1), afin d'émettre un message (45) vers au moins une autre station d'abonné (10 ; 20 ; 30) du système de bus (1), le procédé comprenant l'étape suivante
commander progressivement la commutation de résistances commutables (R_A1 ... R_AN ; R_B1 ... R_BN ; R_C1 ... R_CN ; R_D1 ... R_DN) au moyen d'une partie de commande (15) du module d'émission (121),
dans lequel au moins deux des résistances commutables (R_A2, R_A3 ; RA4 ...R_A7 ; R_A8... R_A16) sont disposées dans un bloc de résistances (162 ; 163 ; 164) de manière à pouvoir être commutées ensemble,
dans lequel il est prévu au moins deux blocs de résistances (161 ; 162 ; 163 ; 164) qui comportent au moins l'une des résistances commutables (R_A2, R_A3 ; RA4 ...R_A7 ; R_A8... R_A16), et
dans lequel la partie de commande (15) génère les états de bus (401 ; 402 ; 403 ; LV0 ; LV1) prédéfinis par le signal d'émission numérique (TxD) au cours du temps (t) sur le bus (40) par modification progressive du nombre de blocs de résistances (162 ; 163 ; 164) commutés actifs au cours du temps (t).
